Europäisches Patentamt

European Patent Office

Office européen des brevets

(11) Numéro de publication : **0 468 879 A1**

# (12) DEMANDE DE BREVET EUROPEEN

(21) Numéro de dépôt : **91402042.5**

(22) Date de dépôt : **23.07.91**

(51) Int. Cl.$^5$ : **H04N 7/00**

(30) Priorité : **25.07.90 FR 9009515**

(43) Date de publication de la demande :
**29.01.92 Bulletin 92/05**

(84) Etats contractants désignés :
**DE GB**

(71) Demandeur : **FRANCE TELECOM**
**6 place d'Alleray**
**F-75015 Paris (FR)**
Demandeur : **TELEDIFFUSION DE FRANCE**
**10, rue d'Oradour sur Glane**
**F-75015 Paris (FR)**

(72) Inventeur : **Veillard, Michel**
**La Beauvairie**
**F-35520 La Meziere (FR)**
Inventeur : **l'Olivier, Germain**
**3 square de Tanouarn**
**F-35700 Rennes (FR)**

(74) Mandataire : **Fréchède, Michel et al**
**Cabinet Plasseraud 84, rue d'Amsterdam**
**F-75009 Paris (FR)**

(54) **Procédé et circuits d'interfaçage émission/réception pour multiplexeur/démultiplexeur de signaux numériques de télévision haute définition HDMAC à bande réduite.**

(57) L'invention concerne un procédé et des circuits d'interfaçage émission/réception pour signaux numériques de télévision HDMAC pour transmission en bande reduite.

Le circuit d'Interfaçage-émission (1) comporte un module (10) de décompression temporelle, un module (11) d'insertion de valeurs arbitraires (zéro), un module (12) de filtrage numérique, un module (13) de sous-echantillonnage. Le circuit d'interfaçage-réception (2) comprend un module (20) d'insertion de valeurs arbitraires (zéro), un module de filtrage numérique (21), un module de sous-échantillonnage (22), un module de compression temporelle (23). Le circuit d'interfaçage-emission (1) est placé entre le codeur HDMACBL (à bande large) fonctionnant selon un format d'image F2 étroit comportant une zone centrale d'image utile et des bandes latérales arbitraires et le multiplexeur HDMACBL fonctionnant selon un format d'image F3 large à bande réduite. Le circuit d'interfaçage-réception (2) est placé entre le démultiplexeur HDMACBL fonctionnant au format d'image F3 large et le décodeur HDMACBL fonctionnant au format d'image F2 étroit.

Application à la transmission de signaux de télévision haute définition sur un canal de transmission à bande réduite.

EP 0 468 879 A1

Jouve, 18, rue Saint-Denis, 75001 PARIS

FIG.4.

La présente invention est relative à un procédé et à des circuits d'interfaçage émission/réception pour multiplexeur/démultiplexeur de signaux numériques de télévision haute définition HDMAC à bande réduite.

Actuellement, les normes ou protocoles d'émission des signaux de télévision sont en pleine évolution, notamment en raison de la mise en place, dans un futur proche, d'un ou plusieurs standards d'émission pour la télévision haute définition, TVHD.

Dans le cadre du projet de coopération EUREKA 95, les partenaires européens ont établi les caractéristiques essentielles d'un système de diffusion de TVHD compatible avec la norme de transmission MAC, tant au niveau de la transmission que de la réception par les récepteurs MAC déjà existants. Comparée à l'image MAC restituée sur un récepteur de télévision MAC existant, l'image haute définition a un format de visualisation plus large, égal à 16/9. En outre, sa définition horizontale et verticale est doublée, 1250 lignes par image avec 1440 pixels par ligne.

La diffusion d'une image haute définition nécessite un canal de transmission dont la bande passante, en bande de base, est de 10,125 MHz, cette valeur étant adaptée aux canaux satellites à 27 MHz utilisant la modulation de fréquence, ainsi qu'aux canaux des réseaux câblés à 12 MHz dans lesquels la modulation d'amplitude est utilisée.

Toutefois la diffusion hertzienne, ainsi que les réseaux câblés à 8 MHz n'offrent pas une telle ressource. Leur bande passante disponible étant égale à 6,75 MHz, ils permettent au plus la diffusion d'images dont la définition est voisine de celle des procédés SECAM ou PAL.

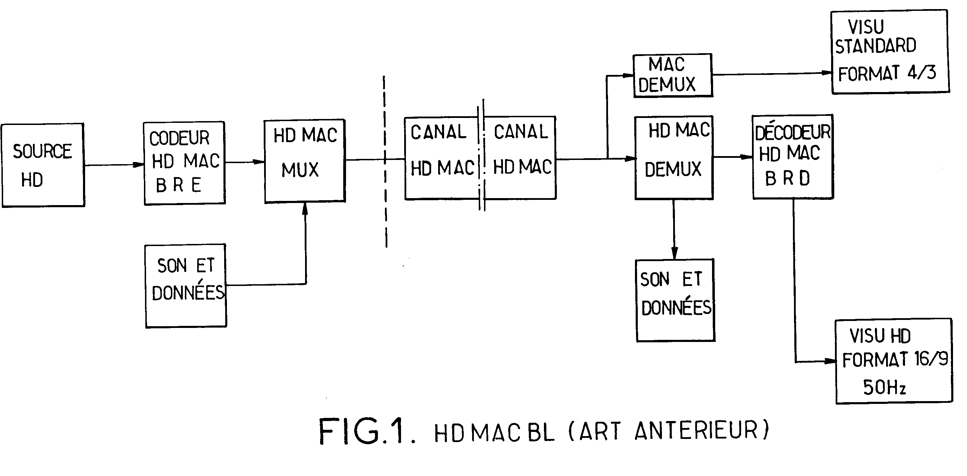

Un rappel du fonctionnement d'une chaîne de diffusion de signaux numériques de télévision haute définition HDMAC, à bande passante la plus large, 12 MHz, appelée de ce fait HDMACBL, sera donné en liaison avec la figure 1 relative à l'art antérieur.

A l'émission, le codeur HDMAC réalise une réduction de largeur de bande du signal vidéo haute définition, en vue de sa transmission dans un canal MAC, (MACBL). Le multiplexeur HDMACBL réalise le multiplexage temporel au standard HDMAC et le signal obtenu est ensuite modulé de manière appropriée au support de transmission.

A la réception, après démodulation, le démultiplexeur HDMACBL remplit la fonction duale du multiplexeur HDMACBL et délivre le signal vidéo au décodeur HDMACBL qui restitue la largeur de bande initiale de l'image haute définition.

Une technique particulière doit cependant être utilisée pour pallier à la limitation de bande passante, apportée par le canal de transmission. Dans le codeur HDMACBL, la réduction de bande passante du signal vidéo haute définition est effectuée en découpant l'image HD par blocs. Chaque bloc est sous échantillonné en fonction d'informations relatives à son activité temporelle. Afin de reconstituer la bande passante initiale, le décodeur MACBL exploite aussi l'activité temporelle des blocs d'images. Dans ce but, des données d'assistance au décodeur HDMACBL sont calculées à l'émission dans le codeur HDMACBL. Le multiplexeur HDMACBL assure la transmission de ces dernières après insertion dans la suppression trame du signal HDMAC.

Le sous échantillonnage précité provoque un repliement de spectre de l'image transmise, la composante de luminance étant repliée autour d'une fréquence de valeur 6,75 MHz et la composante de chrominance autour d'une fréquence de valeur 3,375 MHz. Ces valeurs correspondent après compression temporelle MACBL, à 10,125 MHz. Le signal vidéo est correctement restitué à la réception si la réponse fréquentielle du canal de transmission est équivalente à celle d'un filtre de Nyquist centré sur la valeur 10,125 MHz.

Dans le cas d'une chaîne de diffusion de signaux numériques de télévision haute définition HDMAC à bande passante moins large, 8 MHz, appelée de ce fait HDMAC à bande réduite ou HDMACBR, le même principe est applicable mais le repliement de spectre est effectué autour des 2/3 des valeurs choisies en HDMACBL. Le signal HDMACBR compressé est alors replié autour de la fréquence de valeur 6,75 MHz, valeur adaptée à la bande passante des faisceaux hertziens et des réseaux câblés à 8 MHz. Dans ce cas, le signal vidéo est correctement restitué à la réception si la réponse fréquentielle du canal de transmission est équivalente à celle d'un filtre de Nyquist centré sur la valeur 6,75 MHz.

Bien que les systèmes HDMACBL et HDMACBR précités soient adaptés à deux supports de transmission différents, il est souhaitable, afin de favoriser et faciliter l'introduction du système HDMACBR, de permettre de réutiliser les équipements codeur-multiplexeur ; décodeur-démultiplexeur déjà existants et utilisés avec le système actuel, HDMACBL.

Un objet de la présente invention est en conséquence, la mise en oeuvre d'un procédé et de circuits d'interfaçage émission/réception pour multiplexeur/démultiplexeur de signaux numériques de télévision HDMAC à bande réduite et en particulier afin de permettre l'utilisation du même multiplexeur et du même démultiplexeur pour le système HDMACBL et le système HDMACBR.

Un autre objet de la présente invention est la mise en oeuvre d'un procédé et de circuits d'interfaçage émission/réception pour multiplexeur/démultiplexeur de signaux numériques de télévision haute définition en bande réduite permettant l'utilisation d'équipements existants, notamment le multiplexeur et le démultiplexeur de systèmes de type D2-HDMAC. Pour une définition plus complète des systèmes de diffusion et de transmission des signaux d'image de télévision haute définition au standard MAC ou D2 MAC on pourra se reporter à l'article "Le système D2-MAC/PAQUET" publié en 1986 par I.N.A. Direction de la formation professionnelle 4 avenue de l'Europe, 94366 Bry sur Marne et "Le concept de télévision à haute définition" publié dans la revue l'Onde Electrique, juillet-août 1989, vol. 89 n° 4, pages 3 à 51.

Le procédé de transmission d'un signal numérique de télévision haute définition en bande large, diffusé sur un système de diffusion MAC, comportant un multiplexeur et un démultiplexeur d'un système à bande large HDMACBL et un canal de transmission à bande réduite est remarquable en ce qu'il consiste, à l'émission, à effectuer, en premier lieu, en interface entre les signaux échantillons délivrés par la source haute définition selon un format F0 à 1140 pixels utiles par ligne et le codeur HDMACBL, une transformation dudit format F0 en un format condensé F1 présentant 960 pixels utiles par ligne en zone centrale d'image, aux pixels autres que les pixels utiles étant attribuée une valeur arbitraire pour compléter la zone centrale d'image par des bandes latérales de couleur arbitraire, à effectuer, en deuxième lieu, en interface entre les signaux échantillons délivrés par le codeur HDMACBL à un format F2 étroit, comprenant 480 pixels utiles par ligne de 720 pixels et le multiplexeur HDMACBL une transformation du format F2 étroit en un format F3 large à bande réduite, les 480 pixels utiles de chaque ligne étant pondérés sur les 720 pixels de la ligne correspondante, et, à la réception des signaux d'image au format F3 large à bande réduite transmis sur le canal à bande réduite, à effectuer, en premier lieu, en interface entre le démultiplexeur HDMACBL et le décodeur HDMACBL, une transformation du format F3 large à bande réduite en ledit format F2 étroit comportant 480 pixels en zone utile d'image et deux bandes latérales, à effectuer, en deuxième lieu, en interface entre le décodeur HDMACBL et le récepteur de visualisation, à partir des signaux délivrés par le décodeur HDMACBL au format F1, une transformation de ce format pour délivrer audit récepteur HD une image haute définition au format F0 comportant 1440 pixels par ligne, sans perte ou dégradation notable de définition.

Le circuit d'interfaçage émission objet de l'invention, afin d'assurer une fonction d'interface entre le codeur HDMACBL fonctionnant selon un format d'image F2 comportant une zone centrale d'image utile et des bandes latérales de couleur arbitraire et le multiplexeur HDMACBL des signaux de données images et des signaux de son et de données auxiliaires, les signaux de données images étant décomposées en trois composantes, composante de luminance Y, composantes de chrominance Cr, Cb correspondant audit format d'image F2, est remarquable en ce qu'il comprend des moyens de décompression temporelle des composantes de luminance Y et composantes de chrominance Cr, Cb de façon à effectuer une transformation du format F2 étroit en un format F3 large par suppression des bandes latérales du format F2, ladite décompression temporelle étant effectuée dans un rapport 3/2 sur les échantillons vidéo utiles formant la zone centrale d'image utile, l'ensemble desdits échantillons vidéo occupant, après décompression, toute la durée de la ligne active d'image. Des moyens de filtrage numérique des échantillons vidéo sont prévus pour effectuer une interpolation de rapport 3/2, ces moyens de filtrage numérique délivrant lesdites composantes filtrées Y*, Cr*, Cb* destinées à former par multiplexage les signaux numériques d'image au format F3 large à bande réduite.

Le circuit d'interfaçage réception objet de l'invention, en vue d'assurer une fonction d'interface entre le démultiplexeur HDMACBL, fonctionnant selon un format d'image F3 large avec un multiplex d'entrée des composantes de luminance Y et de chrominance Cb, Cr, et le décodeur HDMACBL fonctionnant selon un format d'image F2 étroit est remarquable en ce qu'il comprend des moyens de transformation du multiplex d'entrée selon trois séquences de signaux de luminance Y de chrominance Cr, Cb et d'insertion d'une valeur arbitraire entre deux valeurs d'échantillons consécutifs de chaque séquence et des moyens de filtrage numérique desdites séquences de signaux de luminance Y, de chrominance Cr, Cb permettant de délivrer des séquences correspondantes filtrées pondérées Y*, Cb*, Cr*. Des moyens de sous échantillonnage par deux sont en outre prévus pour délivrer des échantillons de composantes filtrées pondérées sous échantillonnées par multiplexage. Des moyens de compression temporelle des composantes filtrées pondérées sous échantillonnées sont prévus de façon à effectuer une transformation du format F3 large en un format F2 étroit, cette compression étant effectuée dans un rapport 2/3 sur les échantillons de composantes filtrées pondérées sous échantillonnées pour former la zone centrale d'image utile.

Le procédé et les circuits d'interfaçage objets de la présente invention trouvent application dans le domaine de la télévision haute définition, transmise selon les normes MAC.

Le procédé et les circuits d'interfaçage selon l'invention seront mieux compris à la lecture de la description et des dessins ci-après dans lesquels, outre la figure 1 relative à l'art antérieur,

– la figure 2 représente un schéma illustratif de mise en oeuvre du procédé objet de la présente invention,

– la figure 3 représente un schéma illustratif de la compatibilité, à l'émission du procédé et du circuit d'interfaçage objets de la présente invention,

– les figures 4a et 4b représentent un schéma synoptique d'un circuit d'interfaçage émission respectivement réception selon la présente invention,

– la figure 5a représente un mode de réalisation avantageux non limitatif d'un module de décompression temporelle et d'insertion de valeurs arbitraires, zéros, dans les valeurs d'échantillons,

– la figure 5b représente un gabarit de filtre numérique de pondération de type Nyquist utilisé dans le circuit d'interfaçage émission objet de l'invention,

– la figure 5c représente un gabarit de filtre numérique de pondération de type 1/2 Nyquist utilisé dans le circuit d'interfaçage émission objet de l'invention,

– la figure 5d représente un mode de réalisation avantageux non limitatif d'un filtre numérique présentant les caractéristiques de gabarit amplitude-fréquence tel que représenté en figure 5b,

– la figure 6 représente un schéma illustratif d'un module de sous échantillonnage des composantes filtrées délivrées par le filtre représenté à la figure 5b,

– la figure 7 représente, relativement au circuit d'interfaçage réception selon l'invention, le module d'insertion de valeurs arbitraires, zéro, dans les valeurs d'échantillons,

– la figure 8a représente, un gabarit de filtre utilisé dans le circuit d'interfaçage réception objet de l'invention,

– la figure 8b représente un mode de réalisation avantageux non limitatif d'un filtre numérique présentant les caractéristiques de gabarit amplitude-fréquence tel que représenté en figure 8a,

– la figure 9 représente, dans le circuit d'interfaçage réception, successivement dans le sens de traitement des échantillons, un module de sous échantillonnage avant compression, un module de compression temporelle et un module d'insertion des bandes latérales.

– les figures 10a et 10b représentent un mode de réalisation avantageux non limitatif plus particulièrement destiné à un usage grand public d'un circuit d'interfaçage-réception selon la présente invention et le schéma d'implantation de ce circuit d'interfaçage-réception dans un récepteur grand public.

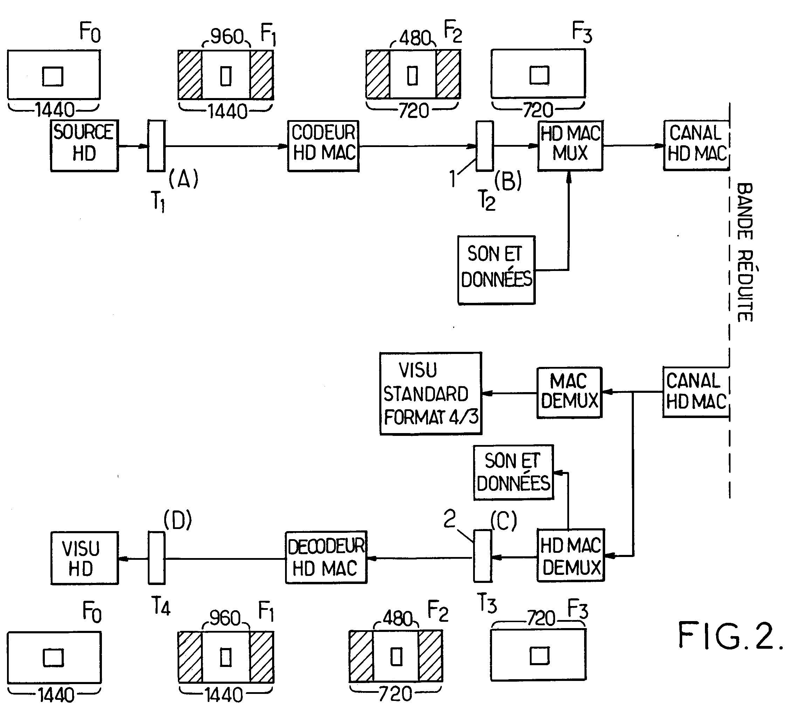

Une description plus détaillée du procédé de transmission d'un signal numérique de télévision haute définition en bande large diffusé selon un système de diffusion de type MAC, cette diffusion intervenant sur un système de type HDMACBR comportant un multiplexeur et un démultiplexeur d'un système à bande large de type HDMACBL et un canal de transmission à bande réduite sera donnée en liason avec la figure 2.

D'une manière générale, on comprendra que le procédé objet de l'invention permet de réaliser les adaptations du multiplexeur HDMACBL et du démultiplexeur HDMACBL au format réduit.

A l'émission, le procédé objet de la présente invention consiste à effectuer une transformation, notée T2 sur la figure 2, entre le format d'image étroit F2 délivré par le codeur HDMACBL et le format large F3 normalement adopté en entrée du multiplexeur HDMACBL lorsque les signaux sont ensuite transmis par un canal à bande réduite.

A la réception, le procédé objet de la présente invention consiste à effectuer une transformation notée T3 entre le format F3 large précédemment cité, format correspondant aux signaux reçus transmis par le canal à bande réduite, et le format F2 étroit précédemment décrit.

Bien entendu, les transformations précitées sont effectuées sans dégradation notable de la qualité de l'image.

Ainsi qu'on l'a représenté de manière plus détaillée en figure 2, le procédé objet de l'invention consiste à l'émission à effectuer en premier lieu, référencé A, en interface entre les signaux échantillons délivrés par la source haute définition selon un format F0, ce format F0 correspondant à un format comportant 1440 pixels utiles par ligne, et le codeur HDMACBL une transformation du format F0 précité en un format condensé F1 présentant 960 pixels utiles par ligne en zone centrale d'image. Aux pixels autres que les pixels utiles est attribuée une valeur arbitraire de luminance et de chrominance pour compléter la zone centrale d'image par des bandes latérales de valeurs arbitraires.

Le procédé objet de l'invention consiste ensuite à effectuer à l'émission, en deuxième lieu noté B, en interface entre les signaux échantillons délivrés par le codeur HDMACBL à un format F2 étroit comprenant 480 pixels utiles par ligne de 720 pixels et le multiplexeur HDMACBL une transformation du format F2 étroit selon le format F3 large à bande réduite précédemment mentionné. Les 480 pixels utiles de chaque ligne ou la valeur de ceux-ci constituant le format F2 étroit précité sont pondérés, la valeur de ces derniers étant répartie sur les 720 pixels de la ligne correspondante pour constituer le format F3 large lequel sera transmis sur le canal à bande réduite.

Ainsi qu'on l'a en outre représenté en figure 2, au niveau réception, le procédé objet de l'invention consiste, à la réception des signaux d'image au format F3 large à bande réduite transmis sur le canal à bande réduite, à effectuer en premier lieu, noté C, en interface entre le démultiplexeur HDMACBL et le déclencheur HDMACBL une transformation du format F3 large à bande réduite en le format F2 étroit comportant 480 pixels en zone utile d'image et deux bandes latérales.

Enfin, le procédé selon la présente invention consiste à effectuer, en deuxième lieu noté B sur la figure 2, en interface entre le décodeur HDMACBL et le récepteur de visualisation à partir de signaux délivrés par le

EP 0 468 879 A1

décodeur HDMACBL au format F1, une transformation de ce format pour délivrer au récepteur haute définition une image haute définition au format F0 précité comportant 1440 pixels par ligne sans perte ou dégradation notable de définition d'image.

De l'observation de la figure 2, on notera le caractère de compatibilité des équipements en HDMACBR en HDMACBL et en D2 MAC conventionnel.

Une telle compatibilité a pour effet de permettre l'utilisation du même multiplexeur et du même démultiplexeur pour le système HDMACBL et le système HDMACBR. On rappelera ainsi, conformément à l'objet de la présente invention, que les deux systèmes précités du fait de la mise en oeuvre du procédé objet de l'invention tel que décrit précédemment en relation avec la figure 2 se distinguent alors uniquement, aux circuits d'interfacage près, par l'utilisation d'un canal de diffusion HDMAC de largeur de bande différente, bande large pour le HDMACBL et bande réduite pour le HDMACBR.

Ainsi, bien que les systèmes HDMACBL et HDMACBR soient adaptés à deux supports ou canaux de transmission différents, on peut ainsi dire que l'introduction d'un système de type HDMACBR est grandement facilitée du fait de la possibilité, en raison de la compatibilité précitée, de réutiliser les mêmes équipements que ceux utilisés dans le système HDMACBL. Une telle caractéristique particulièrement avantageuse est rendue possible par la mise en oeuvre des transformations de format précédemment citées, ces transformations étant réalisées par l'intermédiaire de circuits d'interfaçage, lesquels feront l'objet d'une description détaillée ultérieurement dans la description.

Dans ce but, un nouveau format d'image est utilisé : le format étroit. Ce format tel que le format F2 par exemple est obtenu par une compression temporelle de l'image haute définition au format F0, l'image obtenue après compression temporelle étant bordée par deux bandes latérales placées à gauche et à droite d'une zone d'image centrale. Le passage du format F1 étroit au format F2 étroit est inhérent au fonctionnement du codeur HDMACBL et réciproquement le passage du format F2 au format F1 est inhérent aux fonctions du décodeur HDMACBL dans la partie réception. Bien entendu, les passages des formats F0 à F1 et F1 à F0 sont effectués par les transformations notées A et D sur la figure 2, ces transformations étant effectuées au moyen de circuits d'interfaçage spécifiques. Pour une description plus détaillée des transformations de format haute définition F0 en un format étroit F1 ou F2 on pourra utilement se reporter à la demande de brevet français n° 89 16860 déposée le 15/12/89 et intitulée "Système et décodeur de signal haute définition" de la famille MAC/PAQUETS compatibles avec une transmission en large bande et en bande étroite" et à la demande de brevet français n° 90 03550 intitulée "Procédé et dispositif de codage-décodage d'un signal numérigue de télévision haute définition en bande étroite" déposée le 20/03/90 au nom des demanderesses.

De même on notera le caractère de compatibilité de la mise en oeuvre du procédé objet de l'invention avec les équipements existants pour le multiplexeur et le démultiplexeur d'un système D2 HDMAC.

On notera enfin le caractère de compatibilité des systèmes HDMACBL et HDMACBR avec le système de transmission D2 MAC conventionnel au niveau de l'émission.

En effet, en plus de l'avantage procuré par l'utilisation d'un même équipement de multiplexage D2 HDMAC/PAQUETS en HDMACBL et en HDMACBR, il faut souligner l'intérêt supplémentaire apporté par la compatibilité avec une émission de type D2 MAC conventionnel dans laquelle, dans le cas d'une émission d'une image à 625 lignes de type D2 MAC, il suffit de connecter une acquisition numérique à l'entrée du multiplexeur. La compatibilité précitée permet de passer facilement d'une diffusion d'image de télévision haute définition à une diffusion d'image de télévision normale par simple commutation numérique de la vidéo d'entrée du multiplexeur.

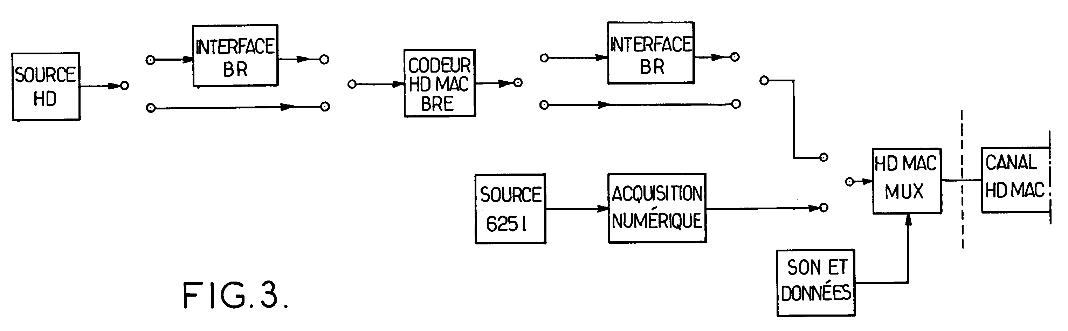

Sur la figure 3 on a illustré le caractère de compatibilité de la channe d'émission pour les trois standards :
– TVHD diffusée en D2 MAC/HDMACBL
– TVHD diffusée en D2 HDMACBR
– image conventionnelle 625 lignes diffusée en D2 MAC.

On notera toutefois que dans le cas de la transmission d'une image comportant 625 lignes en D2 MAC classique il faut alors effectuer deux commutations au niveau du multiplexeur. En outre, un filtre vertical doit être mis en service sur les échantillons vidéo de chrominance Cr, Cb avant sous échantillonnage vertical en séquentiel de ligne, alors qu'il n'est pas nécessaire d'effectuer une telle opération lors d'une diffusion en HDMACBL ou HDMACBR.

On notera enfin que la structure d'échantillonnage des échantillons transmis doit se faire en mode orthogonal alors que le mode quinconce trame doit être choisi en HDMACBL ou HDMACBR.

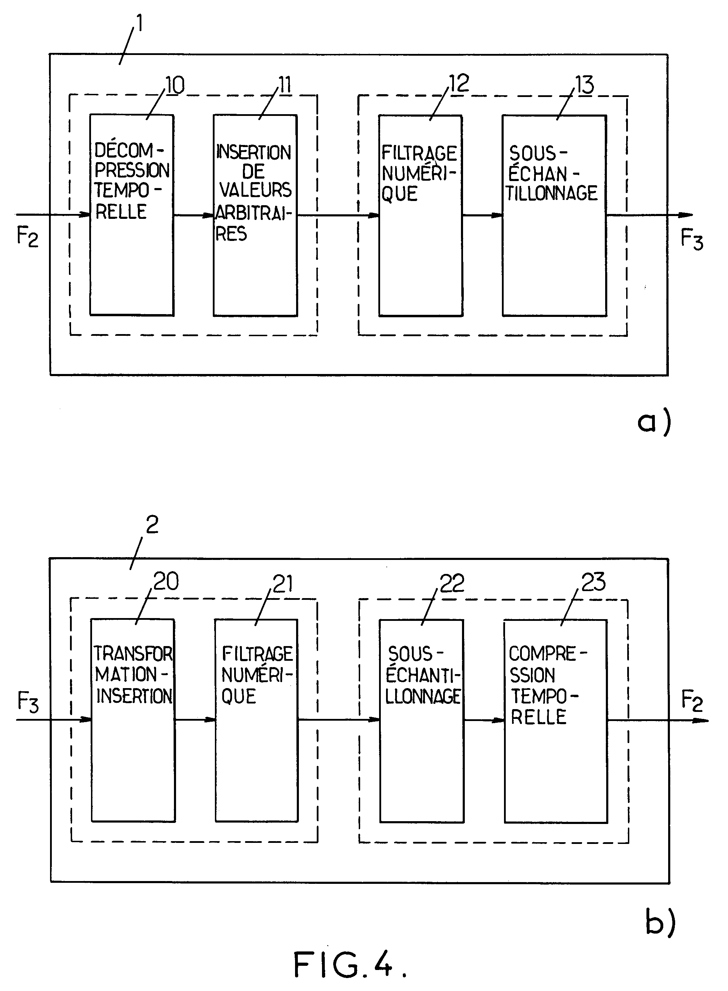

Une description plus détaillée des circuits d'interfaçage émission/réception objets de la présente invention sera maintenant donnée en liaison avec les figures 4a, 4b et suivantes.

En premier lieu, une description détaillée d'un circuit d'interfaçage émission conforme à l'objet de la présente invention sera donnée en liaison avec la figure 4a et 5a, 5b, 5c et 6.

On notera tout d'abord que le multiplex d'échantillons représentatif de l'image aux formats F2 étroit est

6

normalement décomposé en trois composantes de luminance Y, de chrominance Cr et Cb, lesquelles sont traitées de manière séparée selon le même principe. Seuls le nombre d'échantillons et la cadence de traitement diffèrent, les échantillons des composantes de chrominance Cr, Cb ayant un débit moitié par rapport aux échantillons de la composante de luminance Y.

Afin d'assurer la transmission de l'image haute définition dans le canal à bande réduite, conformément à l'objet de la présente invention, le format d'image F2 étroit est modifié de façon à rendre celui-ci compatible d'une part avec la bande passante du canal de transmission et d'autre part avec la norme D2-MAC/PAQUET, afin de permettre une visualisation par les récepteurs compatibles D2-MAC/PAQUET conventionnels.

L'adaptation à la bande passante du canal de transmission est effectuée en éliminant les bandes latérales du format étroit par décompression temporelle des échantillons vidéo utiles dans le rapport 3/2. A cet effet, la fréquence rythme des échantillons est multipliée par le rapport inverse pour cadencer les échantillons, soit 13,5.2/3 = 9 MHz pour la composante de luminance Y et 6,75.2/3 = 4,5 MHz pour les composantes de chrominance Cr et Cb. Suite à la décompression temporelle, les 480 échantillons occupent alors toute la durée de la ligne active vidéo.

Une condition nécessaire afin d'assurer la compatibilité avec la norme D2-MAC/PAQUET est que le nombre de pixels par ligne d'image soit de 720 afin d'obtenir la même disposition en ligne des échantillons après compression MAC. Dans ces conditions, les moyens de compression et d'embrouillage de l'image sont ainsi identiques et la compatibilité avec les décodeurs D2-MAC conventionnels est ainsi assurée.

Dans ce but, une interpolation de rapport 3/2 doit donc être effectuée à partir des 480 pixels obtenus après décompression, afin d'engendrer les 720 pixels nécessaires à la compatibilité précédemment définie. Dans ce but, un filtre numérique est employé afin d'assurer l'interpolation précitée.

Après interpolation des trois composantes de luminance Y de chrominance Cr et Cb, celles-ci sont multiplexées pour obtenir l'image au format F3 large à bande réduite.

Ainsi qu'on l'a représenté en figure 4a, le circuit 1 d'interfaçage émission comprend un circuit 10-11 de décompression temporelle des composantes de luminance Y et de chrominance Cr, Cb pour effectuer la transformation du format F2 étroit en le format F3 précité par suppression des bandes latérales du format F2.

Il comprend en outre un circuit de filtrage 12-13 et de sous-échantillonnage des échantillons vidéo pour effectuer une interpolation de rapport 3/2 précédemment mentionnée. Le circuit de filtrage délivre les composantes filtrées Y*, Cr*, Cb* destinées à former par multiplexage les signaux numériques d'image au format F3 large à bande réduite.

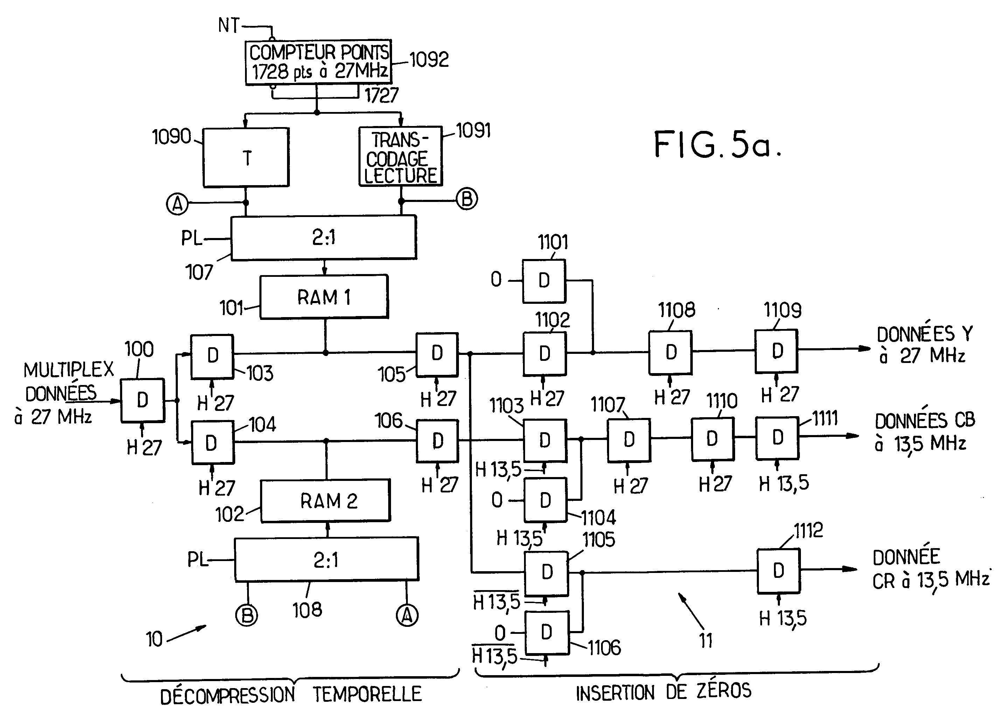

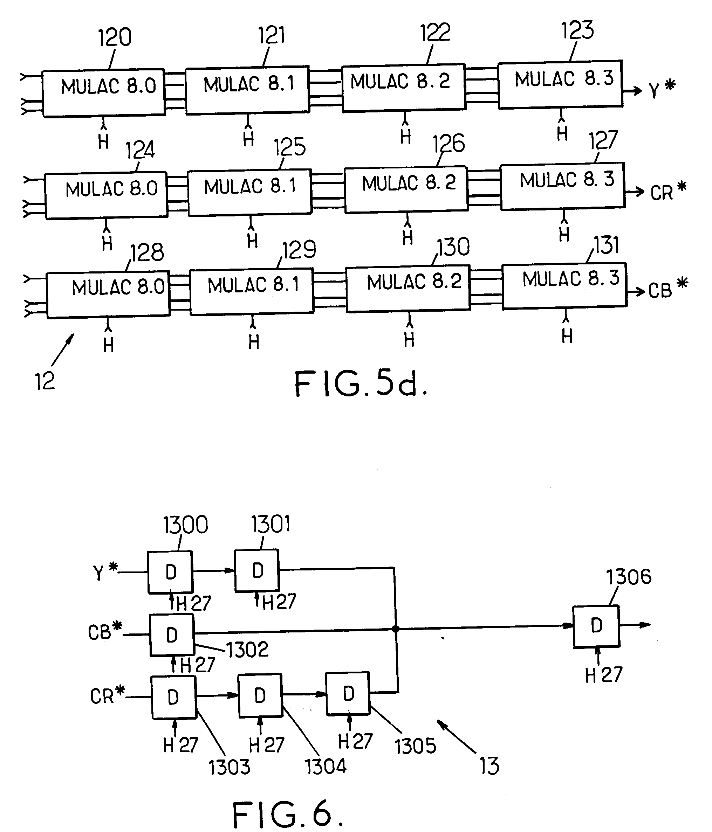

Ainsi qu'on l'a en outre représenté en figure 5a, le circuit de décompression temporelle 10-11 comporte successivement en cascade un module 10 de décompression temporelle proprement dit permettant d'assurer une multiplication de la fréquence rythme des échantillons vidéo par le rapport inverse du rapport de décompression, soit par la valeur 2/3, et un module 11 d'insertion d'échantillon de valeur arbitraire à raison de deux échantillons de valeur arbitraire sur trois échantillons successifs de façon à assurer une interpolation par trois.

Ainsi qu'on l'observera en outre sur la figure 5a, le module 10 de décompression temporelle comprend une première 101 et une deuxième 102 mémoire vive connectées en parallèle et fonctionnant alternativement en écriture lecture. Les première 101 et deuxième 102 mémoire vive au cours d'une ligne vidéo assurent respectivement l'écriture des échantillons vidéo d'entrée au format F2 étroit et la lecture partielle sur les seuls échantillons utiles mémorisé au format étroit F2 pour transformer les échantillons utiles mémorisés de la ligne précédente dans le format F3 large. Le rôle de la première et de la deuxième mémoire vive est permuté à la ligne d'image suivante.

Sur la figure 5a, les circuits 100, 103, 104, 105, 106 représentent des circuits de retard d'une période d'horloge de cadencement du multiplex de données d'entrée à 27 MHz (H 27). On notera que les première et deuxième mémoire vive 101, 102 sont interconnectées par l'intermédiaire des circuits de retard d'un coup d'horloge 100, 103, 105, respectivement 104, 106 en parallèle. Ces circuits sont constitués par un registre bascule de type D par exemple. Les première et deuxième mémoire vive 101, 102 sont également interconnectées respectivement à un multiplexeur deux entrées noté 107, respectivement 108. Les deux entrées des multiplexeurs deux entrées 107 et 108 sont reliées respectivement à un circuit de correction 1090 dont la description sera donnée ultérieurement, et à un circuit de transcodage de lecture 1091, les connexions des entrées du multiplexeur 108 étant effectuées par l'intermédiaire des connexions A et B. Les circuits 1090 et 1091 sont reliés à un compteur de points 1092, lequel permet d'assurer le comptage des points ou pixels relatifs à chaque ligne. Le circuit de correction 1090 structurellement identique au circuit 1091 permet d'introduire un retard sur les adresses identiques à la lecture et à l'écriture.

Les échantillons du multiplex de données d'entrée sur le circuit de retard 100 se présentent sous forme d'un multiplex des trois composantes de luminance Y et de chrominance Cb, Cr au format F2 étroit sous la forme :

------CB1 Y1 CR1 Y2 CB3 Y3 CR3 etc...------

où ------ représente les échantillons des bandes latérales à raison de 240 échantillons par bande latérale et CB1 Y1 CR1 Y2 etc... les échantilons de la partie centrale de l'image

La décompression temporelle est effectuée selon un principe de commutation en écriture-lecture entre la première et la deuxième mémoire vive 101, 102. Tandis que la première mémoire 101 enregistre les échantillons d'entrée dans le format étroit F2, une lecture adaptée de la deuxième mémoire vive 102 transforme les échantillons enregistrés à la ligne précédente dans le format F3 large. A la ligne suivante, le rôle des deux mémoires vives 101, 102 est inversé.

Afin de minimiser la complexité de mise en oeuvre du système, les première et deuxième mémoire vive 101, 102 fonctionnent avec des séquences d'adressage en lecture et en écriture à la même fréquence d'horloge, soit 27 MHz.

La séquence d'adressage de lecture mémoire est obtenue par transcodage des adresses 00 à 1727 issues du compteur point 1092. Lorsqu'une mémoire vive est utilisée en écriture, les 1440 échantillons du format étroit, correspondant aux bandes latérales plus à la zone centrale ou utile de l'image, sont écrits à la fréquence d'horloge de 27 mégahertz à partir du début de la ligne utile. Pour une adresse de début DEB à laquelle l'écriture pour la ligne utile correspondante est effectuée, le format d'écriture à partir de l'adresse DEB précitée est le suivant :

------CB1 Y1 CR1 Y2 CB3 Y3 CR3 etc...------

Lorsqu'une mémoire vive est utilisée en lecture, seule la partie centrale de l'image correspondant à la zone utile de celle-ci est lue à la fréquence de 27 mégahertz.

Ainsi, on a la relation suivante entre adresse d'écriture et adresse de lecture des mémoires vives 101 et 102 :

adresse écriture = DEB-->adresse de lecture = DEB + 240

Le format de lecture le suivant :

CB1 Y1 X CR1 Y2 X CB3 Y3 X CR3 etc...

format dans lequel x représente un échantillon quelconque qui ne sera pas interprété, car systématiquement remplacé par une valeur arbitraire, un zéro, par la suite. Un tel échantillon est lu à une adresse fixe notée adr X, et CB1, Y1, CR1, Y2 représentant les échantillons décompressés.

La correspondance entre les adresses d'écriture et de lecture est alors la suivante :

```
adresse écriture =    DEB-->adresse de lecture =    DEB + 240
                      DEB + 1                        DEB + 241
                      DEB + 2                        adr X
                      DEB + 3                        DEB + 242
                      DEB + 4                        DEB + 243
                      DEB + 5                        adr X
                      etc...
```

La table de correspondance entre adresse d'écriture et adresse de lecture précédemment citée est stockée dans des circuits de type mémoire morte, non représentés en figure 5a, lesquels adressés par le compteur de point 1092 délivrent en sortie les adresses de lecture. Ce transcodage entraîne un retard d'une période d'horloge inhérent au mode de fonctionnement des mémoires mortes. Ce retard est alors compensé sur la voie des adresses d'écriture par le circuit 1090. Après décompression, les échantillons délivrés par les circuits de retard 105 ou 106 sont transmis vers le module d'insertion de zéro 11, lequel sera décrit à nouveau en liaison avec la figure 5a.

Ainsi qu'on pourra l'observer sur la figure 5a précitée, le module 11 d'insertion d'échantillon de valeur zéro comprend, pour chaque composante de luminance Y et de chrominance Cr, Cb, une pluralité de circuits de retard d'une période d'horloge connectés en cascade et formant une chaîne interconnectée aux première et deuxième mémoire vive 101, 102. Chaque chaîne, la chaîne constituée par les circuits de retard 1101, 1102, 1108, 1109 relativement aux données d'échantillon de luminance Y, la chaîne formée par les circuits 1103, 1107, 1110, 1111 et 1104 relativement aux données de composante de chrominance Cb et la chaîne formée par les circuits 1105, 1106, 1112 relativement aux données de composantes de chrominance Cr, chaque chaîne jouant le rôle d'un multiplexeur, est synchronisée selon l'alternance Cb, Y, Cr, Y relative aux composantes correspondantes de façon, d'une part, à engendrer trois séquences distinctes de valeur de luminance Y, de valeur de chrominance Cr et Cb, et, d'autre part, à assurer le maintien de la valeur de la composante à retenir pendant une période d'horloge et l'insertion d'une valeur zéro pendant les deux périodes d'horloge suivantes.

Bien entendu, la durée de maintien de la valeur à retenir et de la valeur arbitraire relativement aux composantes de chrominance Cr, Cb est dans le rapport de fréquence rythme des échantillons. Ainsi les séquences relatives aux composantes de chrominance Cr, Cb sont soumises à un traitement par prise en compte d'un point sur deux pour obtenir une séquence spatiale de composantes de chrominance Cr, Cb semblable à la séquence spatiale de luminance Y.

Ainsi, la séquence de luminance Y est une séquence à 27 MHz de la forme :

Y1 0 0 Y2 0 0 Y3 etc...

L'insertion de valeurs zéro sur la voie Y est effectuée par l'intermédiaire du circuit 1101 par commande de celui-ci, le circuit 1102 étant commandé de façon à laisser passer pendant une période d'horloge à 27 MHz la valeur de la composante correspondante à retenir, et pendant les deux période suivantes la valeur zéro délivrée par le circuit 1101.

En ce qui concerne la séquence d'échantillons de chrominance CB à 13,5 MHz, en premier lieu une séquence CB à 27 MHz est formée, cette séquence s'écrivant :

CB1 CB1 0 0 0 0 CB3 CB3 0 0 0 0 etc...

Puis la séquence CB à 13,5 MHz est ensuite obtenue par prise en compte d'un point sur deux sur la séquence précédente à 27 MHz pour obtenir une séquence de la forme :

CB1 0 0 CB3 0 0 etc...

Bien entendu, les circuits 1103 et 1104 jouent un rôle analogue aux circuits 1102 et 1101 relativement à la séquence de luminance Y.

De même en ce qui concerne la séquence CR à 13,5 MHz relative à la composante de chrominance Cr, le mode opératoire des circuits 1105, 1106 et 1112 est le suivant :

Tout d'abord une séquence CR à 27 MHz est formée, cette séquence s'écrivant :

CR1 CR1 0 0 0 0 CR3 CR3 0 0 0 0 etc...

Puis la séquence CR à 13,5 MHz est obtenue par prise en compte d'un point sur deux, cette nouvelle séquence s'écrivant :

CR1 0 0 CR3 0 0 etc...

En ce qui concerne les séquences CR et CB relatives à la composante de chrominance Cr et Cb, la séquence à 27 MHz est tout d'abord formée en laissant passer pendant deux périodes d'horloge à 27 MHz la composante à retenir, puis la valeur zéro pendant les quatre périodes suivantes. La séquence correspondante à 13,5 MHz constitutive des données de chrominance Cr, Cb est ensuite obtenue par prise en compte d'un point sur deux dans la séquence à 27 MHz.

Chaque voie issue du module d'insertion de valeurs zéro et délivrant les séquences de luminance Y et de chrominance Cr, Cb doit être filtrée avant sous échantillonnage par deux afin d'éviter des repliements de spectre sur l'image.

De manière générale, le circuit de filtrage 12 est constitué par un filtre numérique symétrique à 63 coefficients. Le coefficient central et les 32 coefficients sont stockés dans une mémoire et chargés dans le filtre pendant les intervalles de suppression de trame.

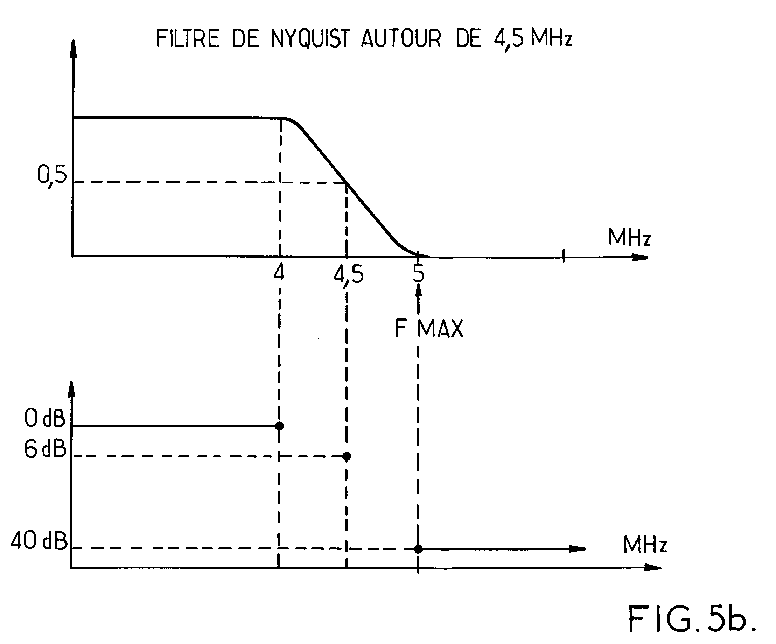

Selon un mode de réalisation non limitatif, le circuit de filtrage constitue un filtre de Nyquist autour de la fréquence de 4,5 MHz, le gabarit du filtre en amplitude fréquence étant donné par la figure 5b. Dans ce cas, les filtres 1/2 Nyquist du multiplexeur et du démultiplexeur HDMACBL sont commutés de façon à constituer des filtres passe-bas en deça de la fréquence FMAX représentée sur la figure 5b.

Selon un autre mode de réalisation non limitatif, le circuit de filtrage peut être constitué par un filtre 1/2 Nyquist, le filtre 1/2 Nyquist complémentaire étant réalisé au niveau du démultiplexeur HDMACBL, ce deuxième filtre étant alors identique à celui couramment utilisé en bande large. De la même manière que dans le cas du premier mode de réalisation, le filtre 1/2 Nyquist du multiplexeur HDMACBL est commuté dans les mêmes conditions.

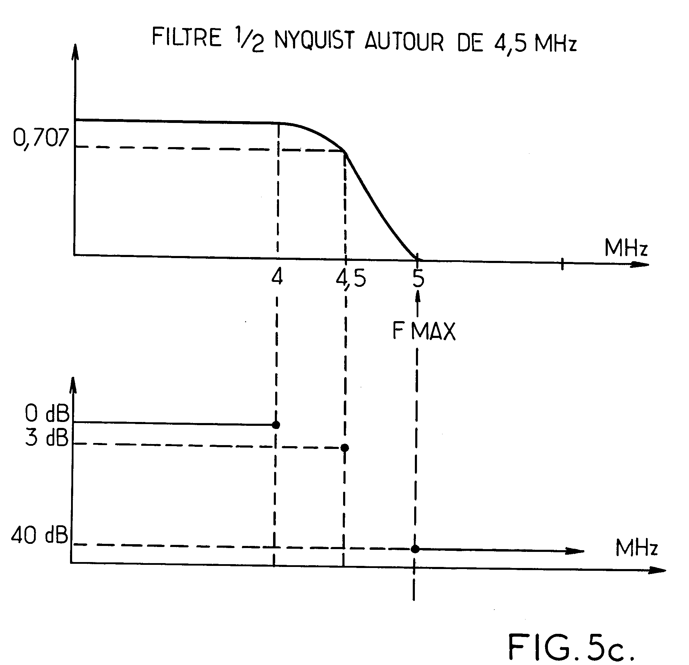

En ce qui concerne la réalisation matérielle du circuit de filtrage 12, celle-ci peut être effectuée au moyen d'un circuit intégré à huit cellules de filtrage. Sur la figure 5c, chaque voie relative aux composantes correspondantes comprend quatre de ces circuits intégrés notés respectivement 120-121-122-123, 124-125-126-127, 128-129-130-131 de façon à obtenir un filtre symétrique de 2 x 31 + 1, soit 63 coefficients, longueur suffisante pour approximer dans de bonnes conditions le gabarit amplitude/fréquence représenté en figure 5b. On notera que chaque coefficient de filtre est quantifié sur douze bits. Les circuits intégrés précédemment mentionnés et représentés en figure 5c sont des circuits intégrés désignés sous la référence MULAC 8 ces circuits sont distribués en Europe par le CNET, Centre National d'Etudes des Télécommunications. Le résultat de synthèse du filtre est donné dans le tableau ci-après constituant le tableau n°1.

TABLEAU 1

| 1 | 0.01151751 | 0.01171875 | 24 | 000000011000 |
|---|---|---|---|---|
| 2 | -0.00507202 | -0.00488281 | -10 | 111111110110 |
| 3 | -0.01147810 | -0.01171875 | -24 | 111111101000 |
| 4 | -0.01225971 | -0.01220703 | -25 | 111111100111 |
| 5 | -0.00129457 | -0.00146484 | -3 | 111111111101 |
| 6 | 0.01137268 | 0.01123047 | 23 | 000000010111 |
| 7 | 0.01280102 | 0.01269531 | 26 | 000000011010 |
| 8 | 0.00026595 | 0.00048828 | 1 | 000000000001 |
| 9 | -0.01707614 | -0.01708984 | -35 | 111111011101 |
| 10 | -0.01970374 | -0.01953125 | -40 | 111111011000 |
| 11 | 0.00052048 | 0.00048828 | 1 | 000000000001 |
| 12 | 0.02452264 | 0.02441406 | 50 | 000000110010 |
| 13 | 0.02690326 | 0.02685547 | 55 | 000000110111 |
| 14 | 0.00092678 | 0.00097656 | 2 | 000000000010 |
| 15 | -0.03270498 | -0.03271484 | -67 | 111110111101 |
| 16 | -0.03699738 | -0.03710937 | -76 | 111110110100 |
| 17 | 0.00069480 | 0.00048828 | 1 | 000000000001 |
| 18 | 0.04620296 | 0.04638672 | 95 | 000001011111 |
| 19 | 0.05132684 | 0.05126953 | 105 | 000001101001 |
| 20 | 0.00102454 | 0.00097656 | 2 | 000000000010 |
| 21 | -0.06392872 | -0.06396484 | -131 | 111101111101 |
| 22 | -0.07277751 | -0.07275391 | -149 | 111101101011 |
| 23 | 0.00069358 | 0.00097656 | 2 | 000000000010 |
| 24 | 0.09558976 | 0.09570312 | 196 | 000011000100 |
| 25 | 0.11128491 | 0.11132812 | 228 | 000011100100 |
| 26 | 0.00105349 | 0.00146484 | 3 | 000000000011 |
| 27 | -0.15990746 | -0.15966797 | -327 | 111010111001 |
| 28 | -0.20256549 | -0.20263672 | -415 | 111001100001 |
| 29 | 0.00069077 | 0.00097656 | 2 | 000000000010 |
| 30 | 0.41157407 | 0.41162109 | 843 | 001101001011 |
| 31 | 0.82626057 | 0.82617187 | 1692 | 011010011100 |
| 32 | 1.00105190 | 0.99902344 | 2046 | 011111111110 |

Bien entendu, chaque voie comporte un filtre identique.

En sortie du filtre relatif à la voie de luminance Y, le débit des échantillons est de 27 mégahertz et en sortie du filtre relatif à la vole de chrominance Cr, le débit des échantillons est de 13,5 MHz. Il en est de même relativement en sortie du filtre de la voie relative à la chrominance Cb. Les échantillons délivrés par chacune des voies précitées, après filtrage, doivent se retrouver en phase. Dans ce but on introduit un retard sur la voie relative aux échantillons de luminance Y, ce retard étant destiné à compenser la différence de temps de propagation entre les filtres relatifs aux voies des signaux de chrominance et le filtre relatif à la voie de luminance. En effet, les échantillons de chrominance Cr et Cb subissent un retard double en raison de leur fréquence d'horloge gui vaut la moitié de celle de la fréquence d'horloge des signaux de luminance Y.

Selon un aspect avantageux du circuit d'interfaçage objet de la présente invention, ce retard est compensé dans le module de décompression temporelle dès l'écriture des échantillons de luminance Y dans les mémoires. Dans ce but, le circuit de compensation de retard T 1090 de la figure 5a est muni d'un transcodage particulier, ce transcodage ayant pour effet d'effectuer un décalage positif sur les adresses d'écriture de luminance. Les échantillons délivrés par chaque voie de filtrage des signaux de luminance Y et de chrominance Cr, Cb sont ensuite soumis, dans le module de sous-échantillonnage 13, à un sous-échantillonnage par deux. Ce module consiste en fait, ainsi que représenté en figure 6, en un module de multiplexage des composantes filtrées Y*, Cr*, Cb* pour engendrer un multiplex de signaux numériques représentatifs d'une image au format F3 large.

Ainsi, pour des séquences de composantes filtrées ci-après :

Y* = y1 y11 y12 y2 y21 y22 y3 y31 y32 etc...
Cr* = cr1 cr11 cr12 cr3 cr31 Cr32 etc...
Cb* = cb1 cb11 cb12 cb13 cb31 Cb32 etc...

on obtient ainsi un multiplex de sortie à 27 MHz représentant l'image au format F3, ce multiplex étant de la forme :

cb1 y1 cr1 y12 cb12 y21 cr12 y3 cb31 y32 cr31 etc...

Sur la figure 6 on a représenté un mode de réalisation avantageux non limitatif du module de sous-échantillonnage 13, celui-ci comportant par exemple des circuits 1300 1301 relativement à la voie de luminance filtrée Y*, un circuit 1302 relativement à la voie de composante de chrominance Cb* et les circuits 1303, 1304, 1305 relativement à la voie de composante de chrominance Cr*. Les circuits 1301 à 1305 sont constitués par des circuits de retard d'un coup d'horloge, déjà mentionnés, l'ensemble de ceux-ci jouant le rôle d'un multiplexeur.

Une description plus détaillée d'un circuit d'interfaçage réception conforme à l'objet de la présente invention sera maintenant donnée en liaison avec les figures 4b et 7, 8a, 8b et 9.

Ainsi qu'on l'a représenté en figure 2 notamment, le circuit d'interfaçage réception 2 objet de la présente invention est disposé en aval du démultiplexeur HDMACBL. On comprendra que, compte tenu de l'insertion du circuit d'interfaçage réception précité, les éléments de décompression et de désembrouillage sont identiques en système HDMACBL et en système HDMACBR ce qui bien entendu est particulièrement avantageux relativement à l'économie des types de circuits mis en oeuvre.

Le circuit d'interfaçage réception 2 remplit en fait une fonction duale du circuit d'interfaçage émission 1, les fonctions mises en jeu étant élaborées selon le même principe.

Ainsi, dans le cas d'une transmission sur un canal HDMAC en bande réduite, le circuit d'interfaçage réception transforme le format d'image large F3 délivré par le démultiplexeur HDMACBL dans le format F2 étroit.

De la même manière que dans le cas de l'émission, les trois composantes de luminance Y et de chrominance Cb et Cr sont obtenues par démultiplexage puis traitées de manière séparée par trois modules similaires à la cadence ou rythme des échantillons près.

Pour des raisons de mise en oeuvre matérielle, il est préférable de réaliser la décimation de rapport 2/3 avant la compression temporelle.

La décimation de rapport 2/3 est effectuée à partir des 720 pixels présents dans les données d'image au format F3 large afin d'obtenir les 480 pixels de la zone utile ou centrale du format F2 étroit. Préalablement à la réalisation de l'opération de sous-échantillonnage il est nécessaire de filtrer les échantillons afin d'éviter les repliements de spectre. La définition du gabarit amplitude fréquence du circuit d'interfaçage réception doit être définie compte tenu des filtres placés en amont dans la chaîne de transmission de façon à ne pas perturber le gabarit global de Nyquist du canal. En conséquence, la bande passante du filtre du circuit d'interfaçage réception 2 sera au moins égale à la fréquence notée FMAX sur la figure 5b précédemment décrite. La réjection hors bande est alors assurée à partir de 6,75 MHz.

Les 480 pixels restants sont ensuite soumis à un traitement de compression temporelle dans un rapport 3/2 afin de placer la partie utile de l'image de format étroit au centre de l'écran. Les bandes latérales gauche et droite sont ensuite ajoutées. Enfin, les composantes de luminance Y, Cr et Cb de chrominance sont multiplexées afin d'obtenir l'image au format F2 étroit.

Ainsi qu'on l'a représenté en figure 4b notamment, en vue d'assurer une fonction d'interface entre le démultiplexeur fonctionnant selon un format d'image F3 large avec un multiplex d'entrée des composantes de luminance Y et de chrominance Cb, Cr et le décodeur HDMACBL fonctionnant selon un format d'image F2 étroit, le circuit d'interfaçage réception 2, ainsi que représenté en figure 4b, comprend un module 20 de transformation du multiplex d'entrée selon trois séquences de signaux de luminance Y, de chrominance Cr, Cb et d'insertion d'une valeur zéro entre deux valeurs échantillons consécutifs de chaque séquence et un module 21 de filtrage numérique des séquences de signaux de luminance Y et de chrominance Cr, Cb permettant de délivrer des séquences correspondantes filtrées pondérées notées Y* Cb* Cr*.

En outre, ainsi qu'on l'a représenté sur la figure 4b, un module 22 de sous-échantillonnage par 2 reçoit les échantillons de chaque composante filtrée pondérée pour délivrer des échantillons de composantes filtrées pondérées sous-échantillonnées par multiplexage. Les composantes filtrées pondérées sous-échantillonnées délivrées par le module 22 sont alors reçues par un module 23 de compression temporelle de ces composantes, de façon à effectuer la transformation de format F3 large en un format F2 étroit. Cette compression est effectuée dans un rapport 2/3 sur les échantillons de composantes filtrées pondérées sous-échantillonnées pour former la zone centrale d'image utile.

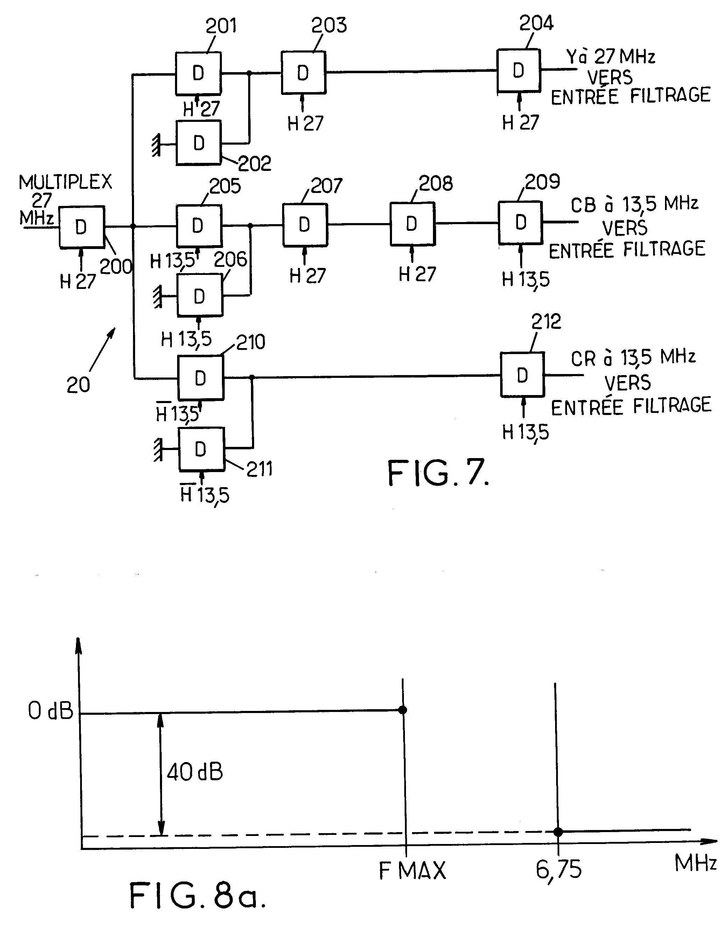

Une description plus détaillée du module 20 de transformation et d'insertion de valeurs arbitraires, valeur zéro, dans les séquences de luminance et de chrominance Cr, Cb sera donnée en liaison avec la figure 7.

Le multiplex d'entrée est reçu par l'intermédiaire d'un circuit de retard 200, ce multiplex d'entrée comportant les trois composantes de luminance et de chrominance au format F3 étant un multiplex à 27 MHz de la forme :

CB1 Y1 CR1 Y2 CB3 Y3 CR3 etc...

Ainsi qu'on le notera à l'observation de la figure 7, le module de transformation et d'insertion d'une valeur arbitraire entre deux échantillons comprend, pour chaque composante de luminance Y et de chrominance Cr,

11

Cb, une pluralité de circuits de retard notés 201, 202, 203, 204 relativement à la composante de luminance Y, 205, 206, 207, 208, 209 relativement à la composante de chrominance Cb, et 210, 211, 212 relativement à la composante de chrominance Cr, les circuits de retard précités entraînant un retard d'une période d'horloge et formant une chaîne correspondante pour chaque composante. Chaque chaîne est synchronisée selon l'alternance Cb, Y, Cr, Y relative aux composantes de luminance Y et de chrominance Cr, Cb et reçoit le multiplex d'entrée pour engendrer d'une part le maintien de la valeur de la composante et l'insertion d'une valeur zéro, pendant les deux périodes d'horloge suivantes.

De la même manière que relativement au module d'insertion de valeurs arbitraires du circuit d'interfaçage émission 1, la durée de maintien de la valeur à retenir et de la valeur arbitraire relativement aux composantes de chrominance Cr, Cb est dans le rapport des fréquences rythme des échantillons. Les séquences relatives aux composantes de chrominance Cr, Cb sont soumises à un traitement par prise en compte d'un échantillon sur deux pour obtenir une séquence de composantes de chrominance Cr, Cb comparable à la séquence de luminance Y.

Ainsi, le multiplex d'entrée est transformé en trois séquences gui sont transmises en aval au module de filtrage numérique 21 de la manière ci-après :
– séquence luminance Y à 27 MHz

Y1 0 Y2 0 Y3 etc...

L'insertion d'une valeur zéro entre deux échantillons successifs est effectuée par multiplexage, chaque chaîne jouant le rôle d'un multiplexeur. Pendant la première moitié de la période d'horloge à 13,5 mégahertz les échantillons d'entrée passent au travers du multiplexeur, alors qu'un zéro est sélectionné sur la deuxième entrée du multiplexeur pendant la seconde moitié de la période d'horloge. Après multiplexage des valeurs d'échantillons et des valeurs zéro, le rythme de sortie est de 27 mégahertz. On comprendra bien sûr que les circuits de retard 201, 202, 203, 204 jouent un rôle analogue aux circuits 1101, 1102, 1108, 1109 de la figure 5a.
– séquence de chrominance CB à 13,5 MHz

En premier lieu une séquence CB à 27 MHz est formée, celle-ci s'écrivant :

CB1 CB1 0 0 CB3 CB3 0 0 etc...

puis la séquence CB à 13,5 MHz est alors réalisée par prise en compte d'un point sur deux de façon à obtenir la séquence correspondante :

CB1 0 CB3 0 etc...

– séquence de chrominance CR à 13,5 MHz : de la même manière que dans le cas de la séquence de chrominance CB précédemment tout d'abord est réalisée une séquence CR à 27 MHz laguelle s'écrit :

CR1 CR1 0 0 CR3 CR3 0 0 etc...

puis la séquence CB à 13,5 MHz est réalisée par prise en compte d'un point sur deux pour réaliser la séquence :

CR1 0 CR3 0 etc...

Ainsi, sur les voies relatives aux séquences de chrominance CR et CB la séquence à 27 MHz est tout d'abord formée en laissant passer pendant deux périodes d'horloge à 27 MHz la composante à retenir, puis la valeur zéro pendant les deux périodes suivantes. La séquence finale à 13,5 MHz est ensuite obtenue par prise en compte d'un point sur deux dans la séquence à 27 MHz. Bien entendu, les séquences précitées sont délivrées par le module 20 de transformation et d'insertion au module de filtrage numérique 21.

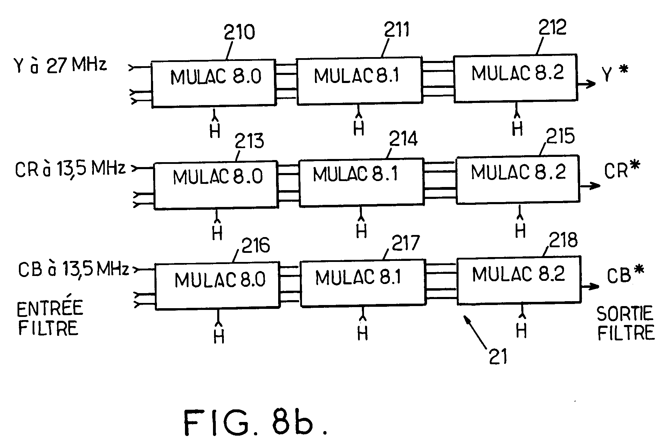

Une description plus détaillée du module 21 de filtrage numérique des séquences de signaux de luminance Y et de chrominance Cr, Cb sera donnée en liaison avec les figures 8a et 8b.

De manière générale on comprendra que le module de filtrage numérique 21 est constitué par un filtre numérique symétrique à 47 coefficients, le coefficient central et les 23 coefficients adjacents étant stockés dans une mémoire et chargés dans le filtre pendant les intervalles de suppression de trame.

Ainsi que représenté en figure 8a, le gabarit amplitude fréquence du filtre ou module de filtrage 21 est donné pour une atténuation de 40 dB à la fréquence de 6,75 MHz. Le gabarit de filtrage ainsi réalisé est plus facile à approcher que relativement aux filtres utilisés dans le circuit d'interfaçage émission 1, si bien qu'il est possible de l'utiliser que trois de ces circuits intégrés en cascade pour chaque voie de composante de luminance Y et de chrominance Cr, Cb, ainsi que représenté en figure 8b. Le résultat de synthèse du filtre est donné dans le tableau ci-après constituant le tableau n° 2.

TABLEAU 2

| | | | |
|---|---|---|---|
| 1 | 0.43529880 | 0.43554687 | 892 |
| 2 | 0.31059784 | 0.31054687 | 636 |
| 3 | 0.06215644 | 0.06250000 | 128 |
| 4 | -0.08409995 | -0.08398437 | -172 |
| 5 | -0.05445564 | -0.05468750 | -112 |
| 6 | 0.03049268 | 0.03027344 | 62 |
| 7 | 0.04366136 | 0.04345703 | 89 |
| 8 | -0.00551958 | -0.00488281 | -10 |
| 9 | -0.03113959 | -0.03125000 | -64 |
| 10 | -0.00670341 | -0.00683594 | -14 |
| 11 | 0.01950911 | 0.01953125 | 40 |
| 12 | 0.01123779 | 0.01123047 | 23 |
| 13 | -0.00967455 | -0.00976562 | -20 |
| 14 | -0.01107384 | -0.01123047 | -23 |
| 15 | 0.00309506 | 0.00292969 | 6 |
| 16 | 0.00851952 | 0.00830078 | 17 |
| 17 | 0.00087713 | 0.00097656 | 2 |
| 18 | -0.00532453 | -0.00537109 | -11 |
| 19 | -0.00211885 | -0.00195312 | -4 |
| 20 | 0.00260717 | 0.00244141 | 5 |
| 21 | 0.00222205 | 0.00244141 | 5 |
| 22 | -0.00089284 | -0.00097656 | -2 |
| 23 | -0.00178222 | -0.00195312 | -4 |
| 24 | 0.00015913 | 0.00048828 | 1 |

Sur la figure précitée, chaque voie est réputée comporter en cascade trois circuits intégrés notés respectivement 210-211-212, 213-214-215 et 216-217-218. En sortie de la voie de filtrage relative à la composante de luminance Y, le débit des échantillons filtrés notés Y* est de 27 MHz et la séquence y des échantillons correspondants après filtrage s'écrit :

y1 y11 y2 y21 y3 y31 y4 etc...

En sortie de la voie de filtrage relative respectivement aux composantes de chrominance Cr et Cb le débit des échantillons est de 13,5 MHz et les séquences des échantillons après filtrage s'écrivent respectivement cr, cb :

cr1 cr11 cr3 cr31 etc...

puis

cb1 cb11 cb3 cb31 etc...

De la même manière que dans le cas du circuit d'interfaçage émission 1, le retard double des filtres des voies de chrominance Cr et Cb par rapport au retard du filtre de la voie luminance Y est compensé dans le module de compression temporelle 23, lequel sera décrit ultérieurement dans la description.

Les composantes filtrées de luminance Y* et de chrominance CR*, CB* sont ensuite soumises à un traitement de sous-échantillonnage par deux, dans le module 22 de sous-échantillonnage, avant compression. Le sous-échantillonnage précité est effectué en formant un multiplex à 27 MHz à partir des séquences y, cr et cb précédemment décrites. Le multiplex est formé à partir des circuits 220-221 relatifs à la voie de la séquence luminance y, du circuit 223 relatif à la composante de chrominance CB et à la séquence de chrominance cb et par les circuits 224-225-226-227 relatifs à la voie de la composante de chrominance CR et de la séquence correspondante cr. Les circuits 220-221-223-224-225-226-227 sont constitués par des circuits de retard d'une période d'horloge à la fréquence 27 MHz.

Le multiplex formé est de la forme :

cb1 y1 x cr1 y21 x cb31 y4 x cr31 etc...

La compression temporelle est alors ensuite effectuée sur le multiplex précité au niveau du module de compression temporelle 23.

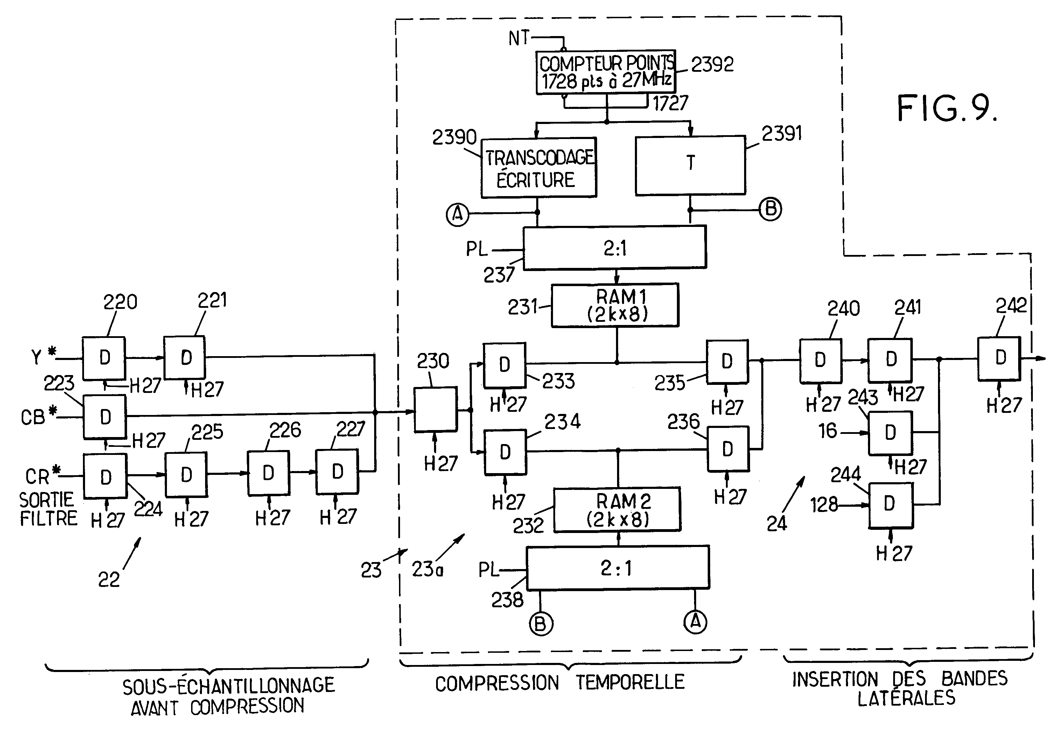

Ainsi qu'on l'a représenté sur la figure 9, la compression temporelle est effectuée au moyen d'un module 23 de compression temporelle proprement dit recevant les échantillons de composantes filtrées pondérées sous-échantillonnées selon le multiplex précédemment décrit, et un module 24 d'insertion des bandes latérales pour former avec la zone centrale d'image utile l'image au format F2 étroit.

En ce qui concerne le module 23 de compression temporelle proprement dit, celui-ci présente une structure analogue au module de décompression proprement dit décrit en liaison avec la figure 5a, les première et deuxième mémoire vive portant les références 231-232, les circuits de retard les références 230 à 236, les multiplexeurs à deux entrées les références 237 et 238, les circuits de transcodage écriture les références 2390 et de transcodage et de retard 2391, le compteur de point portant la référence 2392.

De la même manière que relativement au circuit d'interfaçage émission, la compression temporelle dans le module de compression temporelle 23 utilise le principe de commutation en écriture-lecture entre la première et la deuxième mémoire vive 231-232. La fonction de compression est réalisée selon un mode opératoire analogue. La transformation du format F3 large vers le format F2 étroit est effectuée à l'écriture en mémoire à la fréquence de 27 MHz par un transcodage approprié d'adresse. Les données filtrées selon le multiplex précédemment cité sont inscrites à partir de l'adresse d'écriture DEB+240 selon la loi de transcodage ci-après :

```
adresse lecture =    DEB-->  adresse écriture =  DEB + 240
                     DEB + 1                     DEB + 241
                     DEB + 2                     adr x
                     DEB + 3                     DEB + 242
                     DEB + 4                     DEB + 243
                     DEB + 5                     adr x
                     etc...
```

L'échantillon filtré noté x est ainsi écrit à une adresse constante notée adr x identique à l'adresse X utilisée, ainsi que précédemment décrit, relativement au circuit d'interfaçage émission. Ceci permet ainsi de réutiliser la table de transcodage lecture émission comme table de transcodage à l'écriture dans le circuit d'interfaçage réception. La fonction T réalisée par le circuit 2391 assurant le transcodage est alors placée sur la voie des adresses de lecture et permet de compenser, ainsi que décrit antérieurement dans la description, le retard des filtres des voies relatives aux composantes de chrominance Cr et Cb par un décalage positif sur les adresses de lecture de la composante Y.

Pendant que l'une des première ou deuxième mémoire vive 231-232 est utilisée en écriture, l'autre est utilisée pour lire les échantillons de l'image au format étroit à partir de l'adresse de début DEB, cette adresse s'incrémentant d'une valeur ensuite. A chaque ligne, le rôle des mémoires est inversé. Les échantillons délivrés par le module 23 correspondant à des échantillons compressés au format étroit F2 délivrés par les circuits 235 et 236 de la figure 9 sont ensuite soumis, dans le module 24 d'insertion des bandes latérales, à un processus permettant d'ajouter à la zone centrale d'image utile les bandes latérales afin de réaliser le format F2 étroit. Cette insertion est réalisée au moyen des circuits 240-241-242-243-244, lesquels correspondent à des circuits de retard d'une impulsion d'horloge et jouant ensemble le rôle d'un multiplexeur. Les circuits précités permettent de fixer le niveau vidéo à une valeur constante arbitraire correspondant par exemple à une couleur telle que la couleur gris, pendant la durée des bandes latérales gauche et droite pour former le format étroit F2. Dans ce but, un signal actif entre les adresses de début DEB et les adresses DEB + 239 et l'adresse DEB + 959 à l'adresse DEB + 1439 délimite les bandes latérales et permet à partir des circuits 243 et 244 de fixer la valeur des échantillons correspondants à des niveaux fixes 16 pour la composante de luminance Y et 128 par exemple pour les composantes de chrominance Cr et Cb.

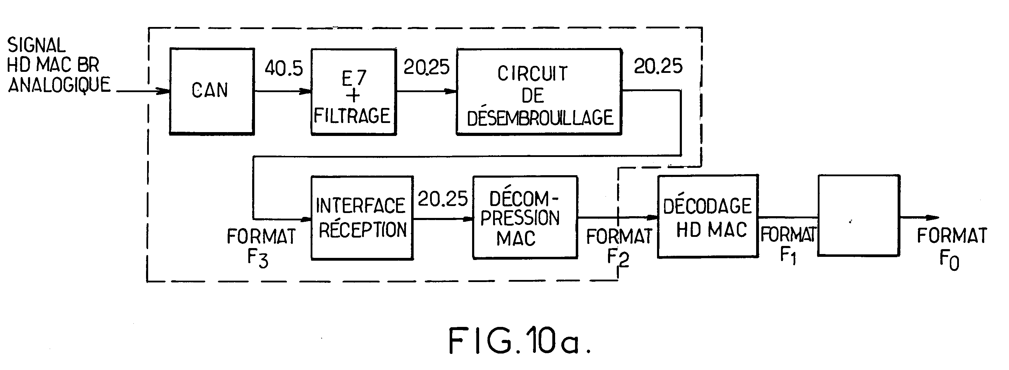

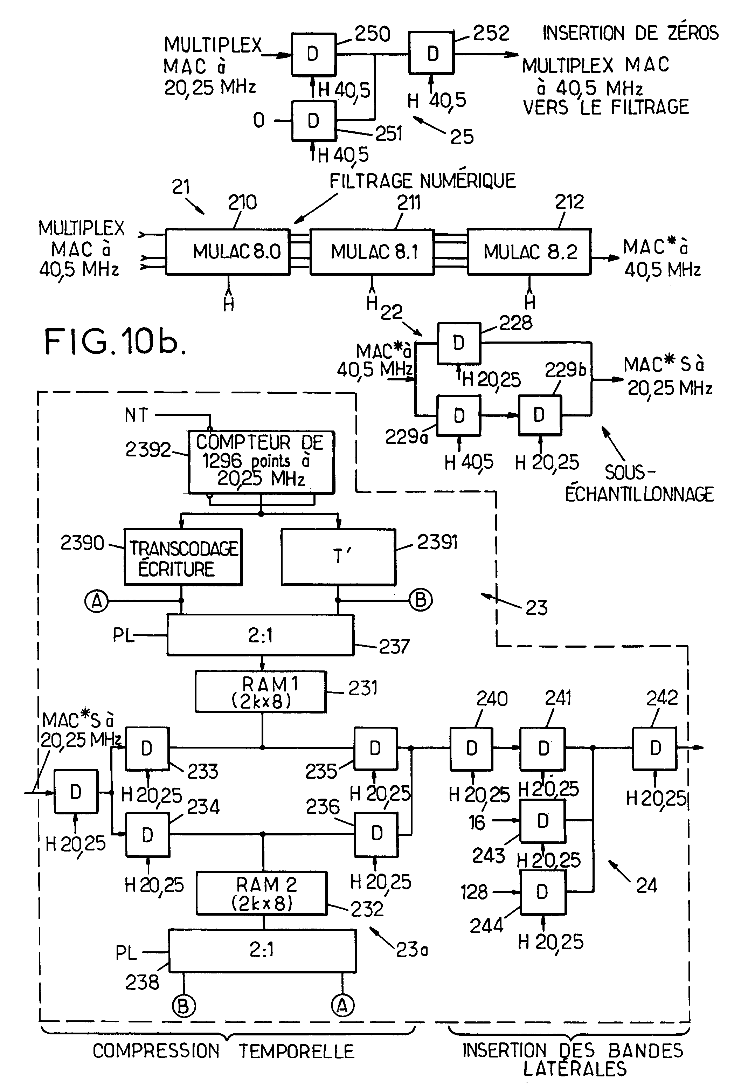

Un mode de réalisation particulièrement avantageux du procédé et du circuit d'interfaçage-réception objets de la présente invention, plus particulièrement destinés à une mise en oeuvre dans une application au niveau de récepteur d'image haute définition grand public, sera donné en liaison avec les figures 10a et 10b.

Ainsi qu'on l'a représenté en figure 10a, l'émission HDMACBR ayant été effectuée conformément au procédé objet de la présente invention précédemment décrit, celui-ci peut consister en outre, à la réception des signaux d'images au format F3 large à bande réduite transmis sur 'le canal à bande réduite, cette réception étant effectuée au niveau d'un récepteur grand public, à effectuer en interface entre le circuit de désembrouillage fonctionnant au format image F3 large à bande réduite et le circuit de décompression MAC, une transformation du format F3 large précitée en le format F2 étroit comportant 480 pixels en zone utile d'image.

Le procédé selon l'invention, dans ce mode de réalisation, consiste ensuite à effectuer en outre, en inter-

EP 0 468 879 A1

face entre le décodeur HDMAC fonctionnant au format F1 précédemment décrit et les organes de visualisation, une transformation de ce format pour délivrer aux organes de visualisation précités une image haute définition au format Fo comportant 1440 pixels par ligne sans perte ou dégradation notable de définition.

Sur la figure 10a on notera que le module CAN, le module E7 + Filtrage, assurant une désaccentuation non linéaire et un filtrage, le circuit de désembrouillage, le circuit d'interfaçage réception selon l'invention et le module de décompression MAC constitue la fonction comparable à celle de HDMAX DEMUX Fig. 1.

Une description plus détaillée d'un circuit d'interfaçage permettant d'assurer, dans un récepteur grand public, une fonction d'interface entre le circuit de désembrouillage fonctionnant selon le format F3 large et le circuit de décompression MAC fonctionnant selon un format F2 étroit, ce circuit d'interfaçage constituant un circuit d'interfaçage-réception sera donné en liaison avec la figure 10b.

Ainsi qu'on l'a représenté en figure 10b, le circuit d'interfaçage-réception 2 comprend dans l'application grand public précitée un module 25 de transformation du multiplex d'entrée MAC à 20,25 MHz en un multiplex de traitement noté MAC à 40,5 MHz. Ce multiplex de traitement est obtenu par insertion, par multiplexage, de valeurs 0 à raison d'une valeur 0 sur deux valeurs d'échantillons MAC. Le module de transformation délivre le multiplex de traitement MAC précité.

Le multiplex d'entrée MAC à 20,25 MHz peut être représenté de la manière suivante :

$$C1\ C3\ C5\ .....\ C_{349}\ x\ x\ x\ x\ x\ Y1\ Y2\ Y3\ ......\ Y_{697}$$

où $C1\ C3\ C5\ ....\ C_{349}$ représentent les 349 échantillons de chrominance, alternativement CR ou CB selon la parité de la ligne d'image, à raison de 349 échantillons occupant le premier tiers de la ligne, et Y1, Y2, Y3 ..... $Y_{697}$ représentent les 697 échantillons de luminance occupant les deux tiers restant de la ligne et xxxxx étant cinq échantillons de mise en forme entre les échantillons de chrominance et de luminance.

Par la suite les 5 échantillons x de mise en forme ne seront pas représentés car inutiles pour l'explication. Ce multiplex d'entrée est transformé en la séquence suivante constituant le multiplex de traitement à 40,5 MHz par insertion d'une valeur zéro tous les deux échantillons MAC :

$$C1\ 0\ C3\ 0\ C5\ ...\ C_{349}\ ........\ Y1\ 0\ Y2\ 0\ Y3...\ Y_{697}\ 0$$

De manière similaire au circuit d'interfaçage de réception précédemment décrit, l'insertion de zéro est effectuée par multiplexage, les bascules 250, 251, 252 circuit retard d'une impulsion d'horloge à 40,5 MHz jouant le rôle d'un multiplexeur.

En outre, le circuit d'interfaçage-réception tel que représenté en figure 10b comporte un module (21) de filtrage recevant le multiplex de traitement MAC.

Ces échantillons formant multiplex de traitement sont à cet effet délivrés au module de 21 filtrage numérique formé de 3 circuits MULAC8 210, 211, 212 gui constituent un filtre numérigue à 47 coefficients identiques aux coefficients du tableau 2 précédemment décrit dans la description. Soient les échantillons filtrés

C1 C11 C3 C31 C5 C51 C7 C71 C9 C91 ..... C349 C349-1 .... Y1 Y11 Y2 Y21 Y3 Y31 Y4

On notera gue le module de filtrage 21 délivre alors un multiplex de traitement filtré pondéré noté MAC* et dont la fréquence est de 4O,5 MHz.

Le circuit d'interfaçage réception 2 tel que représenté en figure 10b comprend alors ensuite un module 22 de sous échantillonnage par deux des échantillons constitutifs du multiplex de traitement filtré pondéré MAC*. Ce module 22 de sous échantillonnage délivre un multiplex de traitement filtré pondéré sous échantillonné noté MAC*S, la prise en compte d'un échantillon sur deux étant effectuée par l'intermédiaire des bascules retard de une impulsion d'horloge 228, 229a et 229b lesgelles sont respectivement cadencées à la fréquence d'horloge de 20,25 MHz, 4O,5 MHz et 20,25 MHz.

En sortie du module 22 de sous échantillonnage, on retient le multiplex des échantillons constituant le multiplex de traitement filtré sous échantillonné MAC*S à 20,25 MHz suivant :

$$C1\ X\ C31\ C7\ X\ C91\ .....\ Y1\ X\ Y21\ Y4\ ....$$

avec X des valeurs quelconque d'échantillons non interprétés par la suite.

La compression temporelle est ensuite effectuée à partir du multiplex MAC*S précité au niveau du module 23a de compression temporelle. Ce module 23a a la même structure que le module 23a de la figure 9.

Le compteur de points 2392 est un compteur de 1296 points à 20,25 MHz.

On notera en conséquence, ainsi que représenté en figure 10b, que le circuit d'interfaçage de réception 2 comprend un module 23a de compression temporelle du multiplex de traitement filtré pondéré sous échantillonné noté MAC*S de façon à effectuer une transformation de format F3 large en un format F2 étroit, cette compression étant effectuée dans un rapport 2/3 sur les échantillons du multiplex de traitement filtré pondéré sous échantillonnés MAC*S pour former la zone centrale d'image utile.

La transformation du format F3 large vers le format F2 étroit est effectuée à l'écriture en mémoire à la fréquence de 20,25 MHz par un transcodage approprié d'adresse réalisant un décalage vers la droite de 120 pixels d'image, soit 120 échantillons Y et 60 échantillons C. Soient DEB c, l'adresse de lecture du premier échantillon c du format large, DEBc+60, l'adresse d'écriture de l'échantillon C1 et DEBy+120, l'adresse d'écriture de

15

l'échantillon Y1

```
adresse lecture    DEBc -->       adresse écriture = DEBc+60
                   DEBc+1                            adr x
                   DEBc+2                            DEBc+61
                   DEBc+3                            DEBc+62
                   DEBc+4                            adr x
                   etc...


adresse lecture DEBY= DEBc+354--> adresse écriture=DEBy+120

                   DEBc+355-->                      adrx
                   DEBc+356-->                      DEBy+121
                   DEBc+357-->                      DEBy+122
                   DEBc+358-->                      adrx
                   etc.....
```

L'échantillon filtré, noté x, est ainsi écrit à une adresse constante adrx quine sera pas relue ultérieurement. La fonction réalisée par le module T′ est un simple retard d'un coup d'horloge à 20,25 MHz, nécessaire afin de compenser le retard pris par le transcodage écriture. Aucun retard entre Y et C n'est à compenser puisque Y et C, traités par le même filtre, subissent le même retard.

De manière générale on notera que les éléments constitutifs des modules 21 de filtrage, 22 de sous échantillonnage et 23 de compression temporelle comportent les mêmes éléments que dans le cas du premier mode de réalisation du circuit d'interfaçage-réception 2 tel que représenté en figures 7 à 9, l'ensemble de ces éléments opérant sensiblement de la même manière que dans le cas précité aux fréquences de cadencement près, lesquelles sont adaptées compte tenu de la fréquence initiale du multiplex d'entrée à 20,25 MHz.

On notera enfin que le module 23 de compression temporelle comprend en fait un module de compression temporelle proprement dit 23a suivi d'un module 24 d'insertion des bandes latérales lequel, consitué par les bascules retard d'une impulsion d'horloge 240, 241, 242, 243, 244, permet d'assurer l'insertion des bandes latérales adjacentes à la zone centrale utile d'image, ainsi que précédemment décrit en relation avec le premier mode de réalisation du circuit d'interfaçage-réception décrit en liaison avec les figures 7 à 9 précitées.

Après compression temporelle, les échantillons sont traités par le module 24 d'insertion des bandes latérales qui fixe les niveaux 16 et 128, respectivement pour Y et C pendant la durée des bandes latérales.

En considérant que 464 pixels d'image (valeur entière de 2/3 x 697) sont retenus par ligne d'image pour constituer la partie centrale de la ligne du format étroit, un signal est engendré afin de délimiter les 464 échantillons Y et les 232 échantillons C. Ce signal est actif entre l'adresse de début DEBc et l'adresse DEBc+59, et entre l'adresse DEBc+290 et l'adresse DEBc+348 pour l'affectation à 128 et de l'adresse DEBc+354 à l'adresse DEBc+473, puis de l'adresse DEBc+938 à l'adresse DEBc+1050 pour l'affectation à 16.

On a ainsi décrit un procédé et des circuits d'interfaçage émission réception pour mutiplexeurs démultiplexeurs de signaux numériques de télévision haute définition HDMAC particulièrement performants, compte tenu du caractère de compatibilité des matériels utilisés en HDMACBL ou bande large pour la réalisation de systèmes en HDMACBR ou en bande réduite dans lesquels la réduction de bande est inhérente au canal de transmission utilisé.

Le principe de compression et de décompression temporelle à horloge unique utilisé dans le procédé et dans les circuits d'interfaçage objets de la présente invention entre le format étroit F2 et le formant large F3 n'est pas limité à ces seules applications.

## Revendications

1. Circuits d'interfaçage émission/réception pour multiplexeur/démultiplexeur de signaux numériques de télévision haute définition HDMAC, caractérisé en ce que afin d'assurer une fonction d'interface entre le codeur HDMACBL, fonctionnant selon un format d'image F2 comportant une zone centrale d'image utile et des bandes latérales de couleur arbitraire, et le multiplexeur HDMACBL des signaux de données images et des signaux de son et de données auxiliaires, lesdits signaux de données images étant décomposées en trois composantes, composante de luminance Y, composantes de chrominance Cr, Cb correspondant audit format d'image F2, ledit circuit (1) d'interfaçage émission comprend :

– des moyens (10,11) de décompression temporelle desdites composantes de luminance Y et composantes de chrominance Cr, Cb de façon à effectuer une transformation du format F2 étroit en un format F3 large à bande réduite par suppression des bandes latérales du format F2, ladite décompression temporelle étant effectuée dans un rapport 3/2 sur les échantillons vidéo utiles, formant la zone centrale d'image utile, l'ensemble desdits échantillons vidéo occupant, après décompression, toute la durée de la ligne active d'image,

– des moyens (12) de filtrage numérique des échantillons vidéo, après décompression, pour effectuer une interpolation de rapport 3/2, lesdits moyens de filtrage numérique délivrant lesdites composantes filtrées Y*, Cr*, Cb* destinées à former par multiplexage les signaux numériques d'image au format F3 large à bande réduite.

2. Circuit d'interfaçage-émission selon la revendication 1, caractérisé en ce que lesdits moyens (10,11) de décompression temporelle comportent successivement en cascade :

– un module (10) de décompression temporelle proprement dite permettant d'assurer une multiplication de la fréquence rythme des échantillons vidéo par le rapport inverse du rapport de décompression, soit 2/3,

– un module (11) d'insertion d'échantillons de valeur zéro à raison de deux échantillons de valeur zéro sur trois, de façon à assurer, une interpolation par trois.

3. Circuit d'interfaçage-émission selon la revendication 2, caractérisé en ce que ledit module (10) de décompression temporelle comprend : une première (101) et une deuxième (102) mémoire vive connectées en parallèle et fonctionnant alternativement en écriture-lecture, lesdites première (101) et deuxième (102) mémoire vive, au cours d'une ligne vidéo, assurant respectivement l'écriture des échantillons vidéo d'entrée au format F2 étroit et la lecture partielle, sur les seuls échantillons utiles mémorisés au format étroit F2 pour transformer les échantillons utiles mémorisés de la ligne précédente dans le format F3 large, le rôle de la première et de la deuxième mémoire vive étant permuté à la ligne d'image suivante.

4. Circuit d'interfaçage-émission selon l'une des revendications 2 ou 3, caractérisé en ce que ledit module (11) d'insertion d'échantillons de valeur arbitraire comprend pour chaque composante de luminance Y et de chrominance Cr, Cb, une pluralité de circuits de retard (1101 à 1112), d'une période d'horloge, connectés en cascade et formant une chaîne interconnectée aux première et deuxième mémoire vive, chaque chaîne (1101 à 1109; 1103 à 1111, 1105 à 1112) étant synchronisée selon l'alternance Cb, Y, Cr, Y relative aux composantes de luminance Y et de chrominance Cr, Cb de façon à, d'une part, engendrer trois séquences distinctes de valeurs de luminance Y, valeur de chrominance Cr, Cb et, d'autre part, assurer le maintien de la valeur de la composante à retenir pendant une période d'horloge et l'insertion d'une valeur zéro pendant les deux périodes d'horloge suivantes, la durée de maintien de la valeur à retenir et de la valeur zéro, relativement aux composantes de chrominance Cr, Cb, étant dans le rapport de fréquence rythme des échantillons de la composante Y et des composantes de chrominance, et les séquences relatives aux composantes de chrominance Cr, Cb étant soumises à un traitement par prise en compte d'un point sur deux pour obtenir une séquence spatiale de composante de chrominance Cr, Cb semblable à la séquence spatiale de luminance Y.

5. Circuit d'interfaçage selon l'une des revendications 1 à 4, caractérisé en ce que lesdits moyens (12) de filtrage numérique sont constitués par un filtre numérique présentant un gabarit amplitude fréquence de type Nyquist autour de la fréquence 4,5 MHz, ce filtre numérique étant un filtre symétrique à 63 coefficients, le coefficient central et les 32 coefficients adjacents étant stockés dans une mémoire et chargés dans le filtre pendant les intervalles de suppression de trame.

6. Circuit d'interfaçage selon l'une des revendications 1 à 4, caractérisé en ce que les dits moyens (22) de filtrage numérique sont constitués par un filtre numérique présentant un gabarit amplitude-fréquence de type 1/2 Nyquist autour de la fréquence 4,5 MHz.

7. Circuit d'interfaçage selon l'une des revendications 1 à 4 et 5 ou 6, caractérisé en ce que afin d'assurer la mise en phase des échantillons filtrés de composante de luminance et de chrominance délivrés par lesdits moyens de filtrage numérique (12), ces composantes de chrominance Cr et Cb subissant un retard double vis-à-vis de la composante de luminance Y, ce retard est compensé au niveau de l'écriture dans la première respectivement deuxième mémoire vive des échantillons de la composante de luminance Y du module de décompression temporelle.

8. Circuit d'interfaçage selon l'une des revendications 5 à 7, caractérisé en ce que lesdits moyens de filtrage (12) comportent en outre, en cascade avec ledit filtre numérique, un module de sous-échantillonnage par trois (13) recevant les composantes filtrées de luminance Y* et de chrominance Cr*, Cb* ce module consistant en un module de multiplexage desdites composantes filtrées pour engendrer un multiplex de signaux numériques représentatifs d'une image au format F3 large.

9. Circuit d'interfaçage selon l'une des revendications 1 à 8, caractérisé en ce que, en vue d'assurer une fonction d'interface entre le démultiplexeur fonctionnant avec un format d'image F3 large selon un multiplex d'entrée des composantes de luminance Y et de chrominance Cb, Cr, et le décodeur HDMACBL, fonctionnant selon un format d'image F2, étroit, ledit circuit d'interfaçage réception (2) comprend :
   – des moyens (20) de transformation dudit multiplex d'entrée selon trois séquences de signaux de luminance Y, de chrominance Cr, Cb et d'insertion d'une valeur zéro entre deux valeurs d'échantillons consécutifs de chaque séquence,
   – des moyens (21) de filtrage numérique desdites séquences de signaux de luminance Y de chrominance Cr, Cb permettant de délivrer des séquences correspondantes filtrées pondérées, Y*, Cb*, Cr*,
   – des moyens (22) de sous-échantillonnage par trois des échantillons de chaque composante filtrées pondérées pour délivrer des échantillons de composantes filtrées pondérées sous-chantillonnées par multiplexage,
   – des moyens (23) de compression temporelle desdites composantes filtrées pondérées sous-échantillonnées de façon à effectuer une transformation de format F3 large en un format F2 étroit, ladite compression étant effectuée dans un rapport 2/3 sur lesdits échantillons de composante filtrée pondérée sous échantillonnée pour former la zone centrale d'image utile.

10. Circuit d'interfaçage selon la revendication 9, caractérisé en ce que lesdits moyens (20) de transformation du multiplex d'entrée et d'insertion d'une valeur zéro entre deux échantillons comprennent, pour chaque composante de luminance Y et de chrominance Cr, Cb une pluralité de circuits de retard, d'une période d'horloge, connectés en cascade et formant une chaîne, chaque chaîne (201 à 204, 205 à 209, 210 à 212) étant synchronisée selon l'alternance Cb, Y, Cr, Y relative aux composantes de luminance Y et de chrominance Cr, Cb et recevant ledit multiplex d'entrée pour engendrer, d'une part, le maintien de la valeur de la composante à retenir pendant une période d'horloge et l'insertion d'une valeur zéro pendant la période d'horloge suivante, la durée de maintien de la valeur à retenir et de la valeur arbitraire relativement aux composantes de chrominance Cr, Cb étant dans le rapport des fréquences rythme des échantillons des composantes Y et composantes Cr, Cb, et les séquences relatives aux composantes de chrominance Cr, Cb étant soumises à un traitement par prise en compte d'un échantillon sur deux pour obtenir une séquence de composante de chrominance Cr, Cb comparable à la séquence de luminance Y.

11. Circuit d'interfaçage selon l'une des revendications 9 ou 10, caractérisé en ce que les moyens (21) de filtrage numérique des séquences de signaux de luminance Y et de chrominance Cr, Cb sont constitués par un filtre numérique présentant un gabarit amplitude-fréquence de type passe-bas de fréquence de coupure Fmax, Fig. 8a, ce filtre étant un filtre symétrique à 47 coefficients, le coefficient central et les 23 coefficients adjacents étant stockés dans une mémoire et chargés dans le filtre pendant les intervalles de suppression de trame.

12. Circuit d'interfaçage selon l'une des revendications 9 à 11, caractérisé en ce que lesdits moyens de compression temporelle comportent en cascade :
   – un module (23a) de compression temporelle proprement dit recevant les échantillons de composante filtrés pondérés sous-échantillonnés,
   – un module (24) d'insertion des bandes latérales pour former avec la zone centrale d'image utile, l'image au format F2 étroit.

13. Circuit d'interfaçage selon la revendication 12, caractérisé en ce que ledit module (23a) de compression temporelle proprement dit comprend :

– une première (231) et une deuxième (232) mémoire vive connectées en parallèle et fonctionnant alternativement en écriture-lecture, lesdites première (231) et deuxième (232) mémoire vive au cours d'une ligne vidéo, assurant respectivement la lecture des échantillons vidéo d'entrée au format F3 large et l'écriture au format F2 étroit pour transformer les échantillons mémorisés de la ligne précédente dans le format F2 étroit, le rôle de la première et de la deuxième mémoire vive étant permuté à la ligne d'image suivante.

14. Circuit d'interfaçage selon l'une des revendications 1 à 8, caractérisé en ce que, en vue d'assurer, dans un récepteur grand public, une fonction d'interface entre le circuit de désembrouillage, fonctionnant selon un format F3 large, et le circuit de décompression MAC, fonctionnant selon un format F2 étroit, ledit circuit d'interfaçage réception (2) comprend :

– des moyens (25) de transformation du multiplex d'entrée, MAC à 20, 25 MHz, en un multiplex de traitement, (MAC) à 40,5 MHz, par insertion par multiplexage de valeurs zéro, à raison d'une valeur zéro sur deux valeurs d'échantillons MAC, ces moyens de transformation délivrant ledit multiplex de traitement (MAC),

– des moyens de filtrage (21) recevant le multiplex de traitement (MAC), ces moyens de filtrage étant constitués par un filtre numérique permettant de délivrer un multiplex de traitement filtré pondéré (MAC*),

– des moyens (22) de sous-échantillonnage par deux des échantillons constitutifs du multiplex de traitement filtré pondéré (MAC*) délivrant un multiplex de traitement filtré pondéré sous échantillonné (MAC*S) à 20,25 MHz,

– des moyens (23) de compression temporelle dudit multiplex de traitement filtré pondéré sous échantillonné (MAC*S) de façon à effectuer une transformation de format F3 large en un format F2 étroit, ladite compression étant effectuée dans un rapport 2/3 sur lesdits échantillons du multiplex de traitement filtré pondéré sous échantillonné (MAC*S) pour former la zone centrale d'image utile.

15. Procédé de transmission d'un signal numérique de télévision haute définition en bande large diffusé selon run système de diffusion MAC, la diffusion dudit signal de télévision haute définition intervenant sur un système de type HDMACBR comportant un multiplexeur et un démultiplexeur d'un système à bande large HDMACBL et un canal de transmission à bande réduite, caractérisé en ce que ledit procédé consiste :

. à l'émission,

– à effectuer, en premier lieu (A), en interface entre les signaux échantillons délivrés par la source haute définition selon un format Fo à 1440 pixels utiles par ligne et le codeur HDMACBL, une transformation dudit format F0 en un format condensé F1 présentant 960 pixels utiles par ligne en zone centrale d'image aux pixels autres que les pixels utiles étant attribués une valeur arbitraire pour compléter la zone centrale d'image par des bandes latérales de valeur arbitraire,

– à effectuer, en deuxième lieu (B), en interface entre les signaux échantillons délivrés par le codeur HDMACBL à un format F2 étroit comprenant 480 pixels utiles par ligne de 720 pixels et le multiplexeur HDMACBL une transformation du format F2 étroit en un format F3 large à bande réduite, les 480 pixels utiles de chaque ligne étant pondérés sur les 720 pixels de la ligne correspondante.

16. Procédé selon la revendication 15, caractérisé en ce qu'il consiste :

. à la réception des signaux d'image au format F3 large à bande réduite transmis sur le canal à bande réduite,

– à effectuer, en premier lieu (C), en interface entre le démultiplexeur HDMACBL et le décodeur HDMACBL, une transformation du format F3 large à bande réduite en ledit format F2 étroit comportant 480 pixels en zone utile d'image et deux bandes latérales,

– à effectuer, en deuxième lieu (D), en interface entre le décodeur HDMACBL et le récepteur de visualisation à partir de signaux délivrés par le décodeur HDMACBL au format F1 une transformation de ce format pour délivrer audit récepteur HD une image haute définition au format F0 comportant 1440 pixels par ligne, sans perte ou dégradation notable de définition.

17. Procédé selon la revendication 15 caractérisé en ce qu'il consiste :

. à la réception des signaux d'image au format F3 large à bande réduite transmis sur le canal à bande réduite, au niveau d'un récepteur grand public,

– à effectuer, en interface entre le circuit de désembrouillage fonctionnant au format image F3 large à bande réduite et le circuit de décompression MAC une transformation du format F3 large à bande réduite en ledit format F2 étroit comportant 480 pixels en zone utile,

– à effectuer en outre, en interface entre le décodeur HDMAC fonctionnant au format F1 et les organes de visualisation, une transformation de ce format pour délivrer auxdits organes de visualisation une image haute définition au format Fo comportant 1440 pixels par ligne, sans perte ou dégradation notable de définition.

FIG.1. HD MAC BL (ART ANTERIEUR)

EP 0 468 879 A1

FIG.2.

FIG.3.

SOURCE HD

INTERFACE BR

CODEUR HD MAC BRE

INTERFACE BR

SOURCE 625 I

ACQUISITION NUMÉRIQUE

HD MAC MUX

CANAL HD MAC

SON ET DONNÉES

EP 0 468 879 A1

a)

b)

FIG.4.

FIG.5a.

NT

COMPTEUR POINTS
1728 pts à 27MHz — 1092

1727

1090 — T        TRANS-
CODAGE — 1091
LECTURE

Ⓐ        Ⓑ

PL — 2:1
107

RAM 1
101

MULTIPLEX
DONNÉES
à 27 MHz        100

D
H 27        103        D        H 27        105

D        104        106        D
H 27        H 27

RAM 2
102

PL — 2:1

Ⓑ        108        Ⓐ

10

DÉCOMPRESSION  TEMPORELLE

1101
0        D

1102        1108        1109
D        D        D
H 27        H 27        H 27        DONNÉES Y
à 27 MHz

1103        1107        1110        1111
D        D        D        D        DONNÉES CB
à 13,5 MHz
H 13,5        H 27        H 27        H 13,5

0        D
1104
H 13,5

1105
D
H̄1̄3̄,5̄

0        D
H̄1̄3̄,5̄        1106

11

1112
D        DONNÉE
CR à 13,5 MHz
H 13,5

INSERTION DE ZÉROS

EP 0 468 879 A1

FILTRE DE NYQUIST AUTOUR DE 4,5 MHz

FIG. 5b.

FILTRE 1/2 NYQUIST AUTOUR DE 4,5 MHz

FIG.5c.

FIG.5d.

FIG.6.

FIG. 7.

FIG. 8a.

Y à 27 MHz

| 210 | 211 | 212 |
|---|---|---|
| MULAC 8.0 | MULAC 8.1 | MULAC 8.2 |

Y *

H     H     H

CR à 13,5 MHz

| 213 | 214 | 215 |
|---|---|---|
| MULAC 8.0 | MULAC 8.1 | MULAC 8.2 |

CR*

H     H     H

CB à 13,5 MHz

| 216 | 217 | 218 |
|---|---|---|
| MULAC 8.0 | MULAC 8.1 | MULAC 8.2 |

CB*

ENTRÉE
FILTRE

H     H     H

SORTIE
FILTRE

21

# FIG. 8b.

FIG.9.

SOUS-ÉCHANTILLONNAGE
AVANT COMPRESSION

COMPRESSION TEMPORELLE

INSERTION DES BANDES
LATÉRALES

SIGNAL
HD MAC BR
ANALOGIQUE

| CAN | 40.5 | E 7 + FILTRAGE | 20.25 | CIRCUIT DE DÉSEMBROUILLAGE | 20.25 |

FORMAT
F3

| INTERFACE RÉCEPTION | 20.25 | DÉCOM- PRESSION MAC | FORMAT F2 | DÉCODAGE HD MAC | FORMAT F1 | | FORMAT F0 |

# FIG.10a.

MULTIPLEX
MAC à
20,25 MHz

D 250  D 252  INSERTION DE ZÉROS

MULTIPLEX MAC
à 40,5 MHz
VERS LE FILTRAGE

↑H 40,5      H 40,5

0  D 251

↑H 40,5                              25

FILTRAGE NUMÉRIQUE

21  210  211  212

MULTIPLEX
MAC à
40,5 MHz

MULAC 8.0  MULAC 8.1  MULAC 8.2

MAC*à
40,5 MHz

↑      ↑      ↑
H      H 22    H

## FIG.10b.

MAC*à
40,5 MHz

D 228  MAC*S à
20,25 MHz

↑H 20,25   229b

229a  D  D

H 40,5  H 20,25  SOUS-
ÉCHANTILLONNAGE

NT

2392  COMPTEUR DE
1296 points à
20,25 MHz

23

2390  TRANSCODAGE
ÉCRITURE

T'  2391

Ⓐ                    Ⓑ

PL  2:1

237

RAM 1
(2k×8)  231

240  241  242

MAC*S à
20,25 MHz

D 233  D 235  D 240  D 241  D 242

H 20,25  H 20,25  H 20,25  H 20,25  H 20,25

D

H 20,25  D 234  D 236  16  D 243

H 20,25  H 20,25  H 20,25

RAM 2
(2k×8)  232  128  D 244  24

PL  2:1  H 20,25

238

Ⓑ                    Ⓐ

COMPRESSION TEMPORELLE        INSERTION DES BANDES
LATÉRALES

Office européen
des brevets

**RAPPORT DE RECHERCHE EUROPEENNE**

Numero de la demande

EP 91 40 2042

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl.5) |
| A | EP-A-0 352 963 (BBC) * Colonne 1, ligne 26 - colonne 2, ligne 31; colonne 4, ligne 52 - colonne 5, ligne 32 * --- | 1,15 | H 04 N 7/00 |
| A | GB-A-2 191 060 (RCA) * Figures 2-4; page 3, ligne 4 - page 5, ligne 9 * --- | 1,15 | |
| A | GLOBECOM'89, Dallas, Texas, 27-30 novembre 1989, vol. 1, pages 226-230, IEEE, New York, US; M. KANAZAWA et al.: "Development of muse and compatible muse systems" * Page 227, colonne de droite, ligne 1 - page 228, colonne de droite, ligne 2 * --- | 1,15 | |
| A | US-A-4 661 862 (RCA) * Résumé * ----- | 1,15 | DOMAINES TECHNIQUES RECHERCHES (Int. Cl.5) H 04 N |
| | Le présent rapport a été établi pour toutes les revendications | | |

| Lieu de la recherche | Date d'achèvement de la recherche | Examinateur |
|---|---|---|
| LA HAYE | 17-10-1991 | BOSCH F.M.D. |

EPO FORM 1503 03.82 (P0402)